(19)

Europäisches Patentamt
European Patent Office
Office européen des brevets

(11) **EP 3 057 259 B1**

(12) **EUROPEAN PATENT SPECIFICATION**

(45) Date of publication and mention of the grant of the patent:
**04.12.2019 Bulletin 2019/49**

(21) Application number: **14852989.4**

(22) Date of filing: **07.10.2014**

(51) Int Cl.:
*H04L 1/16* (2006.01)   *H04L 1/18* (2006.01)
*H04L 5/00* (2006.01)   *H04L 5/14* (2006.01)
*H04W 72/04* (2009.01)   *H04W 72/12* (2009.01)

(86) International application number:
**PCT/KR2014/009423**

(87) International publication number:
**WO 2015/053531 (16.04.2015 Gazette 2015/15)**

(54) **METHOD AND APPARATUS FOR TRANSMITTING ACK/NACK BY TERMINAL IN WIRELESS COMMUNICATION SYSTEM**

VERFAHREN UND VORRICHTUNG ZUR ÜBERTRAGUNG VON ACK/NACK ÜBER EIN ENDGERÄT IN EINEM DRAHTLOSKOMMUNIKATIONSSYSTEM

PROCÉDÉ ET APPAREIL POUR TRANSMETTRE UN ACCUSÉ DE RÉCEPTION (ACK)/ACCUSÉ DE RÉCEPTION NÉGATIF (NACK) PAR UN TERMINAL DANS UN SYSTÈME DE COMMUNICATION SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.10.2013 US 201361887958 P**
**28.11.2013 US 201361910109 P**

(43) Date of publication of application:
**17.08.2016 Bulletin 2016/33**

(73) Proprietor: **LG Electronics Inc.**
**Yeongdeungpo-gu**
**Seoul 07336 (KR)**

(72) Inventors:
• **SEO, Dongyoun**
**Seoul 137-893 (KR)**
• **AHN, Joonkui**
**Seoul 137-893 (KR)**

(74) Representative: **Plasseraud IP**
**66, rue de la Chaussée d'Antin**
**75440 Paris Cedex 09 (FR)**

(56) References cited:
**WO-A1-2011/157233   WO-A1-2012/113345**
**WO-A2-2012/124980   WO-A2-2012/177042**
**US-A1- 2012 213 170   US-A1- 2013 083 707**

• **NEC: "CA-based aspects for FDD-TDD joint operation", 3GPP DRAFT; R1-134253, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Guangzhou; 20131007 - 20131011 27 September 2013 (2013-09-27), XP050717147, Retrieved from the Internet: URL:http://www.3gpp.org/ftp/tsg_ran/WG1_RL 1/TSGR1_74b/Docs/ [retrieved on 2013-09-27]**
• **ETRI ET AL.: 'Discussion on FDD-TDD joint operation solutions' 3GPP TSG RAN WG1 MEETING #74,R1-133184 10 August 2013, BARCELONA, SPAIN, XP055329937 Retrieved from the Internet: <URL:http://www.3gpp.org/ftp/tsg_ran/wg1_rl 1/TSGR1_74/Docs>**
• **BLACKBERRY UK LIMITED ET AL.: 'On Solutions for FDD-TDD joint operation' 3GPP TSG RAN WG1 MEETING #74,RL-133534 10 August 2013, BARCELONA, SPAIN, XP050716641 Retrieved from the Internet: <URL:http://www.3gpp.org/ftp/tsg_ran/wg1_rl 1/TSGR1_74/Docs>**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- LG ELECTRONICS: 'CA -based aspects for FDD-TDD joint operation' 3GPP TSG RAN WG1 MEETING #74,RL-133372 10 August 2013, BARCELONA, SPAIN, XP050716486 Retrieved from the Internet: <URL:http://www.3gpp.org/ftp/tsg_ran/wg1_rl 1/TSGR1_74/Docs>

**Description**

**BACKGROUND OF THE INVENTION**

Field of the invention

The present invention relates to wireless communications, and more particularly, to a method and an apparatus for transmitting an acknowledgement/not-acknowledgement (ACK/NACK) with serving cells aggregated using different types of frames.

Related Art

Long Term Evolution (LTE) based on 3rd Generation Partnership Project (3GPP) Technical Specification (TS) Release 8 is the leading next-generation mobile communication standard.

As disclosed in 3GPP TS 36.211 V8.7.0 (2009-05) "Evolved Universal Terrestrial Radio Access (E-UTRA); Physical Channels and Modulation (Release 8)", in LTE, a physical channel can be divided into a Physical Downlink Shared Channel (PDSCH) and a Physical Downlink Control Channel (PDCCH), that is, downlink channels, and a Physical Uplink Shared Channel (PUSCH) and a Physical Uplink Control Channel (PUCCH), that is, uplink channels.

A PUCCH is an uplink control channel used to send uplink control information, such as a Hybrid Automatic Repeat reQuest (HARQ), an acknowledgement/not-acknowledgement (ACK/NACK) signal, a Channel Quality Indicator (CQI), and a Scheduling Request (SR).

Meanwhile, 3GPP LTE-Advanced (LTE-A) as an evolved version of 3GPP LTE is progressing. A technique introduced in the 3GPP LTE-A includes a carrier aggregation.

The carrier aggregation uses a plurality of component carriers. The component carrier is defined by a center frequency and a bandwidth. One downlink component carrier or a pair of an uplink component carrier and the downlink component carrier corresponds to one cell. A terminal receiving a service using a plurality of downlink component carriers may receive a service from a plurality of serving cells. The carrier aggregation include a cross carrier scheduling where a scheduling cell is different from a scheduled cell and a non-cross carrier scheduling where the scheduling cell is the same as the scheduled cell.

Meanwhile, serving cells using different radio frame structures such as a serving cell using a time division duplex (TDD) radio frame and a serving cell using a frequency division duplex (FDD) radio frame may be aggregated in a next generation wireless communication system. That is, a plurality of serving cells using different types of radio frames may be allocated to the terminal. Alternatively, even if a plurality of serving cells using the same type of radio frame is aggregated, uplink-downlink (UL-DL) configurations of respective serving cells may be different from each other. Examples and embodiments of the prior art may be found in NEC: "CA-based aspects for FDD-TDD joint operation", 3GPP DRAFT; R1-134253, 3RD GENERATION PARTNERSHIP PROJECT (3GPP), or in WO 2012/113345 A1 or in US 2013/0083707A1.

For example, a TDD cell using a TTD frame may be configured as a primary cell for the terminal. A FDD cell using a FDD frame may be configured as a primary cell for the terminal. In this case, when the terminal receives data by a downlink subframe of the FDD cell, which uplink subframe of the TDD cell transmits an ACK/NACK for the data may cause a problem. For example, although a time point to transmit the ACK/NACK is determined by an ACK/NACK timing, the above method may not be applied to a downlink subframe of the FDD cell.

The uplink subframes may not be continuously configured in the TDD frame of the TDD cell. That is, the downlink subframe coexists with the uplink subframe in different times. On the contrary, in the FDD frame of the FDD cell, a downlink subframe and an uplink subframe may be continuously configured in different frequency bands. Accordingly, if data are received by a downlink subframe of the FDD frame existing at the same time as that of the uplink subframe of the TDD frame, when transmits an ACK/NACK for the data may cause a problem.

Meanwhile, the carrier aggregation does not always need to aggregate two cells. That is, three or more cells may be aggregated. In this case, respective cells may use different types of radio frames. There are a need for a method and an apparatus for transmitting an ACK/NACK by a terminal when the respective cells use the different types of radio frames.

**SUMMARY OF THE INVENTION**

This invention is defined and limited by the scope of the appended independent claims. In the following description any embodiment(s) referred to and not falling within the scope of the appended claims 1-4, is (are) merely example(s) used for the understanding of the invention.

The present invention provides a method and an apparatus for transmits an ACK/NACK by a terminal with three or more serving cells aggregated using different types of radio frames.

In one aspect, provided is a method for transmitting an ACK/NACK by a user equipment according to claim 1 or 3.

In still another aspect, provided is a user equipment according to claim 4.

Even if three or more serving cells using different types of radio frames are aggregated, since the terminal may transmit the ACK/NACK, an HARQ process can be efficiently operated.

## BRIEF DESCRIPTION OF THE DRAWINGS

FIG. 1 shows the structure of an FDD radio frame.

FIG. 2 shows the structure of a TDD radio frame.

FIG. 3 shows an example of a resource grid for one downlink slot.

FIG. 4 shows the structure of a DL subframe.

FIG. 5 shows the structure of an UL subframe.

FIG. 6 shows the channel structure of a PUCCH format 1b in a normal CP.

FIG. 7 shows the channel structure of PUCCH formats 2/2a/2b in a normal CP.

FIG. 8 illustrates the channel structure of a PUCCH format 3.

Fig. 9 illustrates a downlink HARQ which is performed by one cell in 3GPP LTE.

FIG. 10 shows an example of a comparison between a single carrier system and a carrier aggregation system.

Fig. 11 illustrates an example where a plurality of serving cells uses different types of radio frames.

Fig. 12 illustrates another example where a plurality of serving cell uses different types of radio frames in a wireless communication system.

FIG. 13 illustrates a case of <TDD0, TDD2, FDD>.

FIG. 14 illustrates a case of <TDD0, FDD, TDD2>.

Fig. 15 is a flowchart illustrating a method for transmitting an ACK/NACK by a terminal according to an embodiment of the present invention.

Fig. 16 is a block diagram illustrating a wireless device according to an embodiment of the present invention.

## DESCRIPTION OF EXEMPLARY EMBODIMENTS

User Equipment (UE) can be fixed or can have mobility. UE can also be called another term, such as a Mobile Station (MS), a Mobile Terminal (MT), a User Terminal (UT), a Subscriber Station (SS), a wireless device, a Personal Digital Assistant (PDA), a wireless modem, or a handheld device.

The BS commonly refers to a fixed station that communicates with UE. The BS can also be called another tem, such as an evolved-NodeB (eNodeB), a Base Transceiver System (BTS), or an access point.

Communication from a BS to UE is called downlink (DL), and communication from UE to a BS is called uplink (UL). A wireless communication system including a BS and UE can be a Time Division Duplex (TDD) system or a Frequency Division Duplex (FDD) system. A TDD system is a wireless communication system that performs UL and DL transmission/reception using different times in the same frequency band. An FDD system is a wireless communication system that enables UL and DL transmission/reception at the same time using different frequency bands. A wireless communication system can perform communication using radio frames (a radio frame can be called a frame).

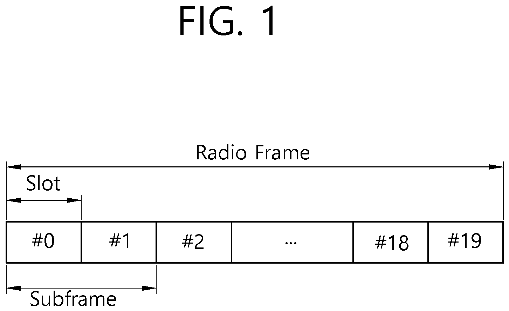

FIG. 1 shows the structure of an FDD radio frame.

The FDD radio frame includes 10 subframes, and one subframe includes two consecutive slots. The slots within the radio frame are assigned indices 0~19. The time that is taken for one subframe to be transmitted is called a Transmission Time Interval (TTI). A TTI can be a minimum scheduling unit. For example, the length of one subframe can be 1 ms, and the length of one slot can be 0.5 ms. Hereinafter, the FDD radio frame may be simply referred to as an FDD frame.

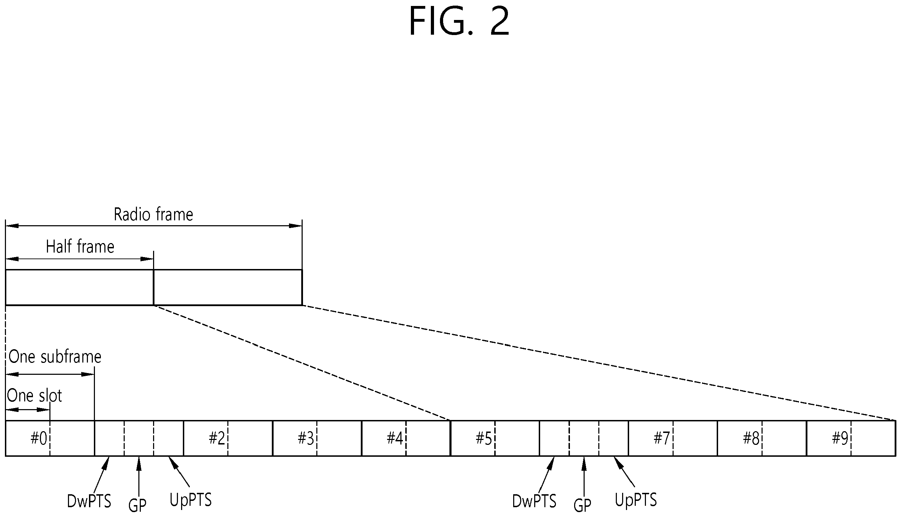

FIG. 2 shows the structure of a TDD radio frame.

Referring to FIG. 2, a downlink (DL) subframe and an uplink (UL) subframe coexist in a TDD radio frame used in TDD. Table 1 shows an example of a UL-DL configuration of the radio frame.

[Table 1]

| Uplink-downlink configuration | Downlink-to-uplink switch-point periodicity | Subframe number | | | | | | | | | |
|---|---|---|---|---|---|---|---|---|---|---|---|
| | | 0 | 1 | 2 | 3 | 4 | 5 | 6 | 7 | 8 | 9 |
| 0 | 5 ms | D | S | U | U | U | D | S | U | U | U |
| 1 | 5 ms | D | S | U | U | D | D | S | U | U | D |

(continued)

| Uplink-downlink configuration | Downlink-to-uplink switch-point periodicity | Subframe number | | | | | | | | | |
|---|---|---|---|---|---|---|---|---|---|---|---|
| | | 0 | 1 | 2 | 3 | 4 | 5 | 6 | 7 | 8 | 9 |
| 2 | 5 ms | D | S | U | D | D | D | S | U | D | D |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 5 ms | D | S | U | U | U | D | S | U | U | D |

In Table 1, 'D' indicates a DL subframe, 'U' indicates a UL subframe, and 'S' indicates a special subframe. When a UL-DL configuration is received from a BS, a UE can be aware of whether each subframe in a radio frame is a DL subframe or a UL subframe. Hereinafter, reference can be made to Table 1 for a UL-DL configuration N (N is any one of 0 to 6).

In the TDD frame, a subframe having an index #1 and an index #6 may be a special subframe, and includes a downlink pilot time slot (DwPTS), a guard period (GP), and an uplink pilot time slot (UpPTS). The DwPTS is used in initial cell search, synchronization, or channel estimation in UE. The UpPTS is used for channel estimation in a BS and for the uplink transmission synchronization of UE. The GP is an interval in which interference occurring in UL due to the multi-path delay of a DL signal between UL and DL is removed. Hereinafter, the TDD radio frame may be simply referred to as a TDD frame.

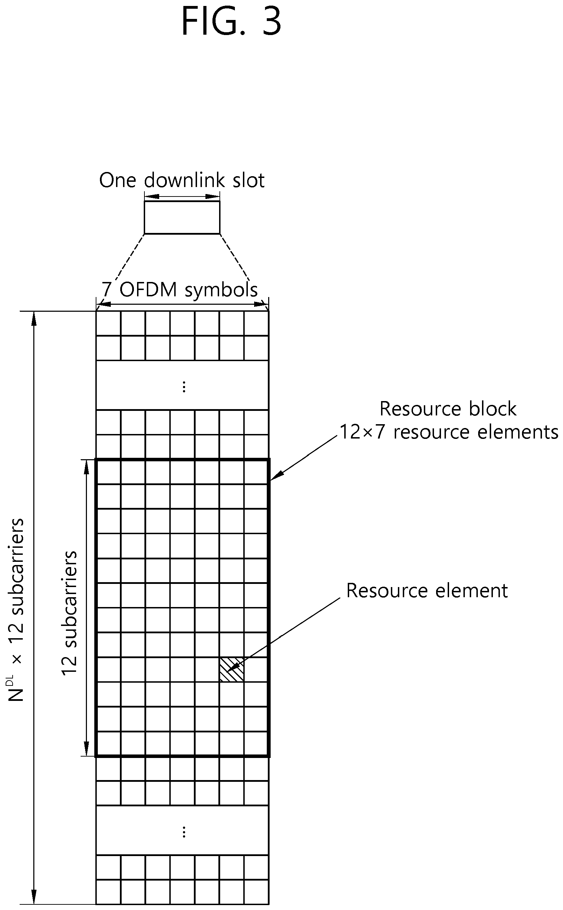

FIG. 3 shows an example of a resource grid for one downlink slot.

Referring to FIG. 3, the downlink slot includes a plurality of Orthogonal Frequency Division Multiplexing (OFDM) symbol in the time domain and includes $N_{RB}$ Resource Blocks (RBs) in the frequency domain. The RBs includes one slot in the time domain and a plurality of consecutive subcarrier in the frequency domain in a resource allocation unit. The number of RBs $N_{RB}$ included in the downlink slot depends on a downlink transmission bandwidth $N^{DL}$ configured in a cell. For example, in an LTE system, the $N_{RB}$ can be any one of 6 to 110. An uplink slot can have the same structure as the downlink slot.

Each element on the resource grid is called a Resource Element (RE). The RE on the resource grid can be identified by an index pair (k,l) within a slot. Here, k ($k=0, ..., N_{RB} \times 12-1$) is a subcarrier index within the frequency domain, and 1 (1=0,..., 6) is an OFDM symbol index within the time domain.

Although $7 \times 12$ REs including 7 OFDM symbols in the time domain and 12 subcarrier in the frequency domain have been illustrated as being included in one RB in FIG. 3, the number of OFDM symbols and the number of subcarriers within an RB are not limited thereto. The number of OFDM symbols and the number of subcarriers can be changed in various ways depending on the length of a CP, frequency spacing, etc. In one OFDM symbol, one of 128, 256, 512, 1024, 1536, and 2048 can be selected and used as the number of subcarriers.

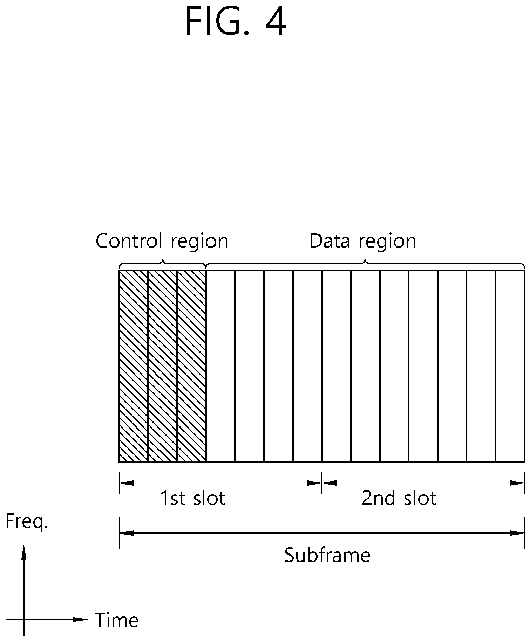

FIG. 4 shows the structure of a DL subframe.

Referring to FIG. 4, a downlink (DL) subframe is divided into a control region and a data region in the time domain. The control region includes a maximum of former 3 (maximun 4 according to circumstances) OFDM symbols of a first slot within a subframe, but the number of OFDM symbols included in the control region can be changed. A physical downlink control channel (PDCCH) and another control channel are allocated to the control region, and a physical downlink shared channel (PDSCH) is allocated to the data region.

As disclosed in 3GPP TS 36.211 V8.7.0, in 3GPP LTE, physical channels can be divided into a physical downlink shared channel (PDSCH) and a physical uplink shared channel (PUSCH), that is, data channels, and a physical downlink control channel (PDCCH), a physical control format indicator channel (PCFICH), a physical hybrid-ARQ indicator channel (PHICH), and a physical uplink control channel (PUCCH), that is, control channels.

A PCFICH that is transmitted in the first OFDM symbol of a subframe carries a Control Format Indicator (CFI) regarding the number of OFDM symbols (i.e., the size of a control region) that are used to send control channels within the subframe. UE first receives a CFI on a PCFICH and then monitors PDCCHs. Unlike in a PDCCH, a PCFICH is not subject to blind decoding, but is transmitted through the fixed PCFICH resources of a subframe.

A PHICH carries a positive-acknowledgement (ACK)/negative-acknowledgement (NACK) signal for an uplink Hybrid Automatic Repeat reQuest (HARQ). An ACK/NACK signal for uplink (UL) data on a PUSCH which is transmitted by UE is transmitted on a PHICH.

A physical broadcast channel (PBCH) is transmitted in the former 4 OFDM symbols of a second slot within the first subframe of a radio frame. The PBCH carries system information that is essential for UE to communicate with a BS, and system information transmitted through a PBCH is called a Master Information Block (MIB). In contrast, system information transmitted on a PDSCH indicated by a PDCCH is called a System Information Block (SIB).

Control information transmitted through a PDCCH is called Downlink Control Information (DCI). DCI can include the resource allocation of a PDSCH (this is also called a DL grant), the resource allocation of a PUSCH (this is also called an UL grant), a set of transmit power control commands for individual MSs within a specific UE group and/or the activation of a Voice over Internet Protocol (VoIP). DCI has different formats, which will be described later.

A control region in a subframe includes a plurality of control channel elements (CCEs). A CCE is a logical allocation unit used to provide a coding rate according to the state of a radio channel to a PDCCH and corresponds to a plurality of resource element groups (REGs). An REG includes a plurality of REs. A PDCCH format and the number of available PDCCH bits are determined based on a relationship between the number of CCEs and a coding rate provided by CCEs.

One REG includes four REs, and one CCE includes nine REGs. To construct one PDCCH, {1, 2, 4, 8} CCEs may be used, and each element of {1, 2, 4, 8} is defined as a CCE aggregation level.

The number of CCEs used to transmit a PDDCH is determined by a base station based on a channel state.

Meanwhile, in 3GPP LTE, blind decoding is used to detect a PDCCH. Blind decoding is a process of de-masking a cyclic redundancy check (CRC) of a received PDCCH (PDCCH candidate) with a desired identifier to check a CRC error, thereby allowing a UE to identify whether the PDCCH is a control channel of the UE. The UE does not recognize a position in which a PDCCH thereof is transmitted in a control region and a CCE aggregation level or DCI format used to transmit the PDCCH.

A plurality of PDCCHs may be transmitted in one subframe. The UE monitors a plurality of PDCCHs in each subframe. Here, monitoring refers to an attempt of the UE to decode a PDCCH according to a monitored PDCCH format.

In 3GPP LET, a search space is used to reduce load caused by blind decoding. A search space may denote a monitoring set of CCEs for a PDCCH. A UE monitors a PDCCH in a corresponding search space.

A search space is divided into a common search space (CSS) and a UE-specific search space (USS). A CSS is a space for searching for a PDCCH having common control information, which includes 16 CCEs with CCE indexes of 0 to 15 and supports a PDCCH having a CCE aggregation level of {4, 8}. However, a PDCCH (DCI format 0 and 1A) carrying UE-specific information may also be transmitted to the CSS. The USS supports a PDCCH having a CEE aggregation level of {1, 2, 4, 8}.

A different start point of a search space is defined for a CSS and a USS. A start point of a CSS is fixed regardless of subframes, while a start point of a USS may change by subframe according to an UE ID (for example, C-RNTI), a CCE aggregation level and/or a slot number in a radio frame. When the start point of the USS is in the CSS, the USS and the CSS may overlap.

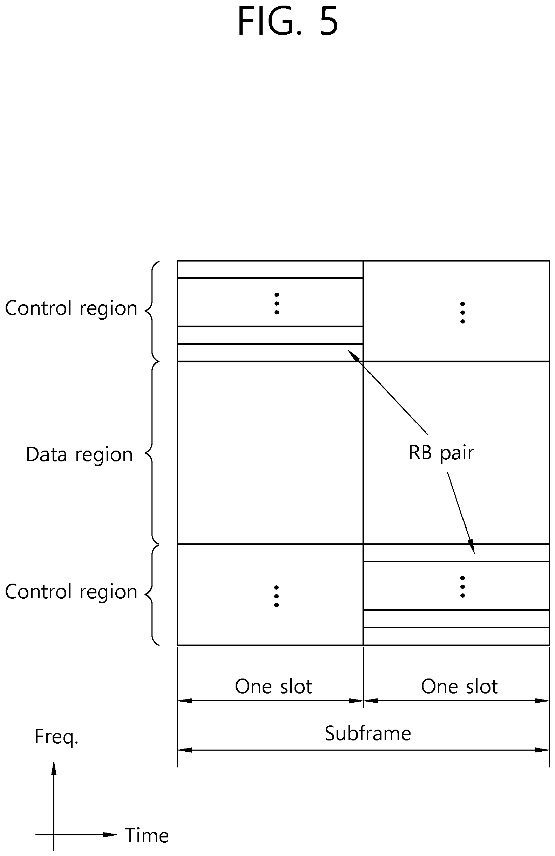

FIG. 5 shows the structure of an UL subframe.

Referring to FIG. 5, the UL subframe can be divided into a control region to which a physical uplink control channel (PUCCH) for carrying uplink control information is allocated and a data region to which a physical uplink shared channel (PUSCH) for carrying user data is allocated in the frequency domain.

A PUCCH is allocated with an RB pair in a subframe. RBs that belong to an RB pair occupy different subcarriers in a fist slot and a second slot. An RB pair has the same RB index m.

In accordance with 3GPP TS 36.211 V8.7.0, a PUCCH supports multiple formats. A PUCCH having a different number of bits in each subframe can be used according to a modulation scheme that is dependent on a PUCCH format.

Table 2 below shows an example of modulation schemes and the number of bits per subframe according to PUCCH formats.

[Table 2]

| PUCCH format | Modulation scheme | Number of bits per subframe |
|---|---|---|
| 1 | N/A | N/A |
| 1a | BPSK | 1 |
| 1b | QPSK | 2 |
| 2 | QPSK | 20 |
| 2a | QPSK+BPSK | 21 |
| 2b | QPSK+QPSK | 22 |

The PUCCH format 1 is used to send a Scheduling Request (SR), the PUCCH formats 1a/1b are used to send an ACK/NACK signal for an HARQ, the PUCCH format 2 is used to send a CQI, and the PUCCH formats 2a/2b are used to send a CQI and an ACK/NACK signal at the same time. When only an ACK/NACK signal is transmitted in a subframe, the PUCCH formats 1a/1b are used. When only an SR is transmitted, the PUCCH format 1 is used. When an SR and an ACK/NACK signal are transmitted at the same time, the PUCCH format 1 is used. In this case, the ACK/NACK signal is modulated into resources allocated to the SR and is then transmitted.

All the PUCCH formats use the Cyclic Shift (CS) of a sequence in each OFDM symbol. A CS sequence is generated by cyclically shifting a base sequence by a specific CS amount. The specific CS amount is indicated by a CS index.

An example in which a base sequence $r_u(n)$ has been defined is the same as the following equation.

[Equation 1]

$$r_u(n) = e^{jb(n)\pi/4}$$

Here, u is a root index, n is an element index wherein $0 \le n \le N-1$, and N is the length of the base sequence. b(n) is defined in section 5.5 of 3GPP TS 36.211 V8.7.0.

The length of a sequence is the same as the number of elements included in the sequence. U can be determined by a cell identifier (ID), a slot number within a radio frame, etc.

Assuming that a base sequence is mapped to one resource block in the frequency domain, the length N of the base sequence becomes 12 because one resource block includes 12 subcarriers. A different base sequence is defined depending on a different root index.

A CS sequence $r(n, I_{cs})$ can be generated by cyclically shifting the base sequence r(n) as in Equation 2.

[Equation 2]

$$r(n, I_{cs}) = r(n) \cdot \exp(\frac{j2\pi I_{cs}n}{N}), \quad 0 \le I_{cs} \le N-1$$

Here, $I_{cs}$ is a CS index indicative of a CS amount $(0 \le I_{cs} \le N-1)$.

An available CS index of a base sequence refers to a CS index that can be derived from the base sequence according to a CS interval. For example, the length of a base sequence is 12 and a CS interval is 1, a total number of available CS indices of the base sequence becomes 12. Or, if the length of a base sequence is 12 and a CS interval is 2, a total number of available CS indices of the base sequence becomes 6.

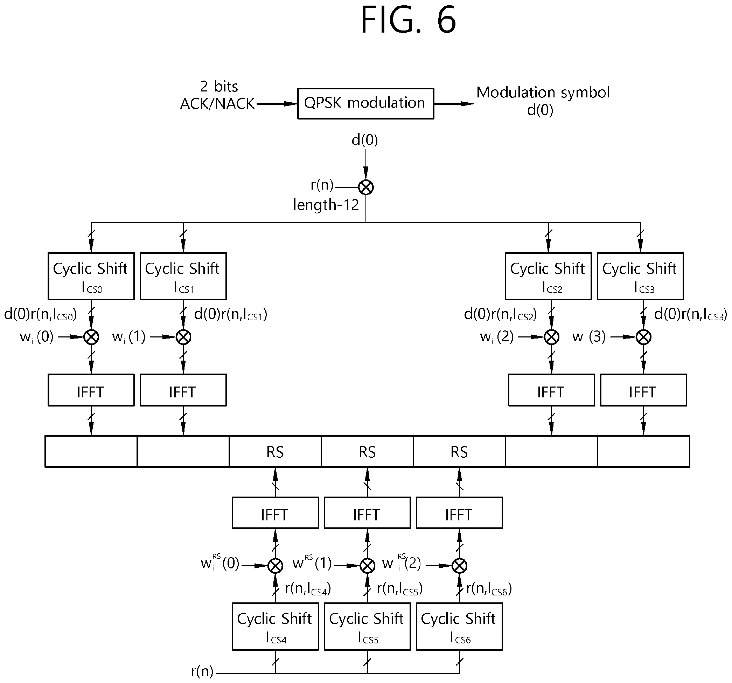

FIG. 6 shows the channel structure of the PUCCH format 1b in a normal CP.

One slot includes 7 OFDM symbols, the 3 OFDM symbols become Reference Signal (RS) OFDM symbols for a reference signal, and the 4 OFDM symbols become data OFDM symbols for an ACK/NACK signal.

In the PUCCH format 1b, a modulation symbol d(0) is generated by performing Quadrature Phase Shift Keying (QPSK) modulation on an encoded 2-bit ACK/NACK signal.

A CS index $I_{cs}$ can vary depending on a slot number 'ns' within a radio frame and/or a symbol index 'l' within a slot.

In a normal CP, 4 data OFDM symbols for sending an ACK/NACK signal are present in one slot. It is assumed that corresponding CS indices in respective data OFDM symbols are $I_{cs0}$, $I_{cs1}$, $I_{cs2}$, and $I_{cs3}$.

The modulation symbol d(0) is spread into a CS sequence r(n,Ics). Assuming that a 1-dimensional spread sequence corresponding to an $(i+1)^{th}$ OFDM symbol is m(i) in a slot,

{m(0), m(1), m(2), m(3)} = (d(0)r(n,$I_{cs0}$), d(0)r(n$_5 I_{cs1}$)$_5$ d(0)r(n,$I_{cs2}$), d(0)r(n,$I_{cs3}$)} can be obtained.

In order to increase a UE capacity, the 1-dimensional spread sequence can be spread using an orthogonal sequence. The following sequence is used as an orthogonal sequence $w_i(k)$ (i is a sequence index, $0 \le k \le K-1$) wherein a spreading factor K=4.

[Table 3]

| Index (i) | [$w_i(0)$, $w_i(1)$, $w_i(2)$, $w_i(3)$] |
|---|---|
| 0 | [+1, +1, +1, +1] |
| 1 | [+1, -1, +1, -1] |
| 2 | [+1, -1, -1, +1] |

The following sequence is used as an orthogonal sequence $w_i(k)$ (i is a sequence index, $0 \leq k \leq K-1$) wherein a spreading factor K=3.

[Table 4]

| Index (i) | $[w_i(0), w_i(1), w_i(2)]$ |
|---|---|
| 0 | $[+1, +1, +1]$ |
| 1 | $[+1, e^{j2\pi/3}, e^{j4\pi/3}]$ |
| 2 | $[+1, e^{j4\pi/3}, e^{j2\pi/3}]$ |

A different spreading factor can be used in each slot.

Accordingly, assuming that a specific orthogonal sequence index i is given, 2-dimensional spread sequences (s(0), s(1), s(2), s(3)} can be expressed as follows.

$$\{s(0),\ s(1),\ s(2),\ s(3)\} = \{w_i(0)m(0),\ w_i(1)m(1),\ w_i(2)m(2),\ w_i(3)m(3)\}$$

The 2-dimensional spread sequences {s(0), s(1), s(2), s(3)} are subject to IFFT and then transmitted in a corresponding OFDM symbol. Accordingly, an ACK/NACK signal is transmitted on a PUCCH.

A reference signal having the PUCCH format 1b is also transmitted by spreading the reference signal into an orthogonal sequence after cyclically shifting a base sequence r(n). Assuming that CS indices corresponding to 3 RS OFDM symbols are $I_{cs4}$, $I_{cs5}$, and $I_{cs6}$, 3 CS sequences $r(n,I_{cs4})$, $r(n,I_{cs5})$, $r(n,I_{cs6})$ can be obtained. The 3 CS sequences are spread into an orthogonal sequence $w^{RS}_i(k)$ wherein K=3.

An orthogonal sequence index i, a CS index $I_{cs}$, and an RB index m are parameters necessary to configure a PUCCH and are also resources used to classify PUCCHs (or MSs). If the number of available CSs is 12 and the number of available orthogonal sequence indices is 3, a PUCCH for a total of 36 MSs can be multiplexed with one RB.

In 3GPP LTE, a resource index $n^{(1)}_{PUCCH}$ is defined so that UE can obtain the three parameters for configuring a PUCCH. The resource index $n^{(1)}_{PUCCH} = n_{CCE} + N^{(1)}_{PUCCH}$, wherein $n_{CCE}$ is the number of the first CCE used to send a corresponding PDCCH (i.e., PDCCH including the allocation of DL resources used to received downlink data corresponding to an ACK/NACK signal), and $N^{(1)}_{PUCCH}$ is a parameter that is informed of UE by a BS through a higher layer message.

Time, frequency, and code resources used to send an ACK/NACK signal are called ACK/NACK resources or PUCCH resources. As described above, an index of ACK/NACK resources (called an ACK/NACK resource index or PUCCH index) used to send an ACK/NACK signal on a PUCCH can be represented as at least one of an orthogonal sequence index i, a CS index $I_{cs}$, an RB index m, and an index for calculating the 3 indices. ACK/NACK resources can include at least one of an orthogonal sequence, a CS, a resource block, and a combination of them.

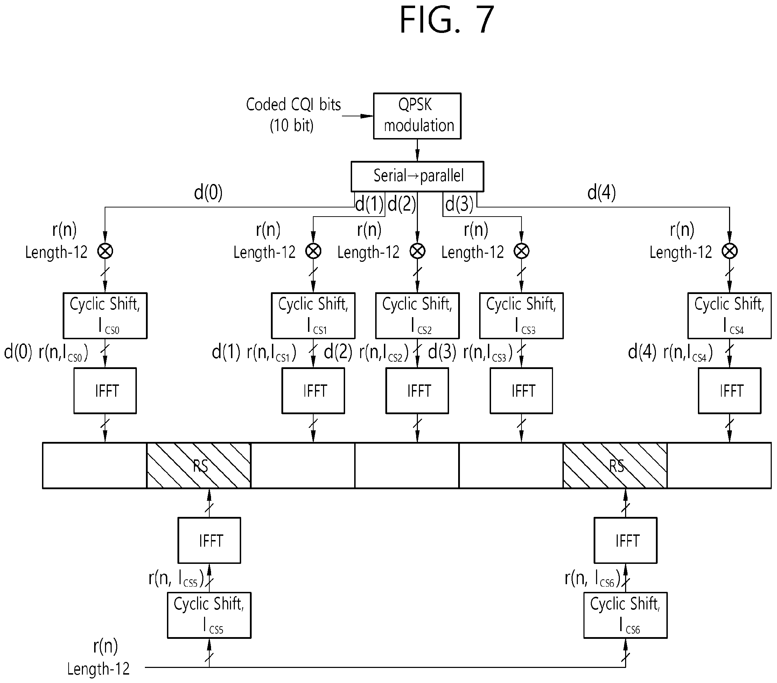

FIG. 7 shows the channel structure of the PUCCH formats 2/2a/2b in a normal CP.

Referring to FIG. 7, in a normal CP, OFDM symbols 1 and 5 (i.e., second and sixth OFDM symbols) are used to send a demodulation reference signal (DM RS),t hat is, an uplink reference signal, and the remaining OFDM symbols are used to send a CQI. In the case of an extended CP, an OFDM symbol 3 (fourth symbol) is used for a DM RS.

10 CQI information bits can be subject to channel coding at a 1/2 code rate, for example, thus becoming 20 coded bits. Reed-Muller code can be used in the channel coding. Next, the 20 coded bits are scramble and then subject to QPSK constellation mapping, thereby generating a QPSK modulation symbol (d(0) to d(4) in a slot 0). Each QPSK modulation symbol is modulated in a cyclic shift of a base RS sequence 'r(n)' having a length of 12, subject to IFFT, and then transmitted in each of 10 SC-FDMA symbols within a subframe. Uniformly spaced 12 CSs enable 12 different MSs to be orthogonally multiplexed in the same PUCCH RB. A base RS sequence 'r(n)' having a length of 12 can be used as a DM RS sequence applied to OFDM symbols 1 and 5.

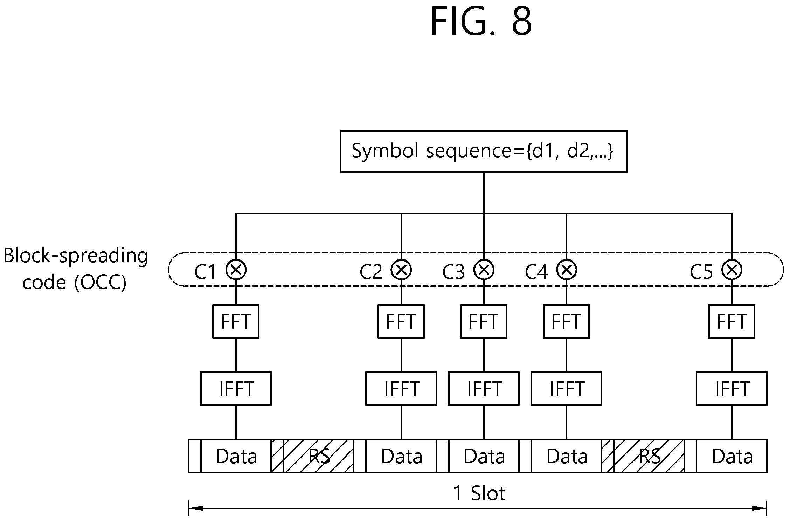

FIG. 8 shows an example of a channel structure of a PUCCH format 3.

Referring to FIG. 8, the PUCCH format 3 is a PUCCH format which uses a block spreading scheme. The block spreading scheme means a method of spreading a symbol sequence, which is obtained by modulating a multi-bit ACK/NACK, in a time domain by using a block spreading code.

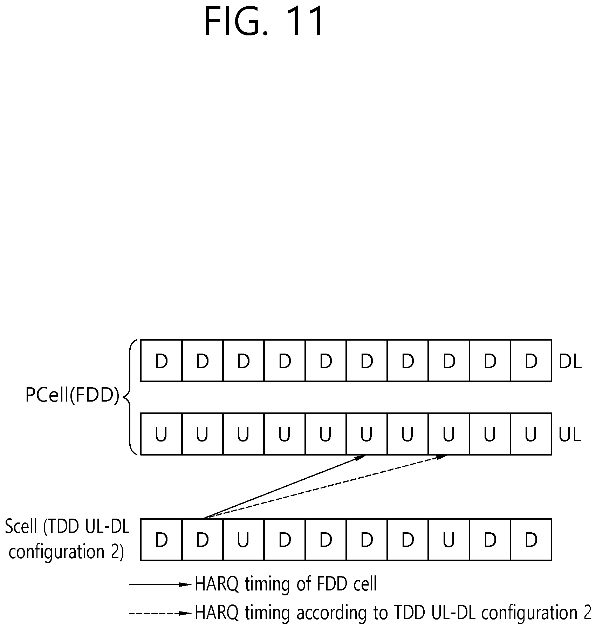

In the PUCCH format 3, a symbol sequence (e.g., ACK/NACK symbol sequence) is transmitted by being spread in the time domain by using the block spreading code. An orthogonal cover code (OCC) may be used as the block spreading code. Control signals of several UEs may be multiplexed by the block spreading code. In the PUCCH format 2, a symbol (e.g., d(0), d(1), d(2), d(3), d(4), etc., of FIG. 7) transmitted in each data symbol is different, and UE multiplexing is performed using the cyclic shift of a constant amplitude zero auto-correlation (CAZAC) sequence. In contrast, in the PUCCH format 3, a symbol sequence including one or more symbols is transmitted in a frequency domain of each data symbol, the symbol sequence is spread in a time domain by using the block spreading code, and UE multiplexing is performed. An example in which 2 RS symbols are used in one slot has been illustrated in FIG. 11, but the present invention is not limited thereto. 3 RS symbols may be used, and an OCC having a spreading factor value of 4 may be used. An RS symbol may be generated from a CAZAC sequence having a specific cyclic shift and may be transmitted in such a manner that a plurality of RS symbols in the time domain has been multiplied by a specific OCC.

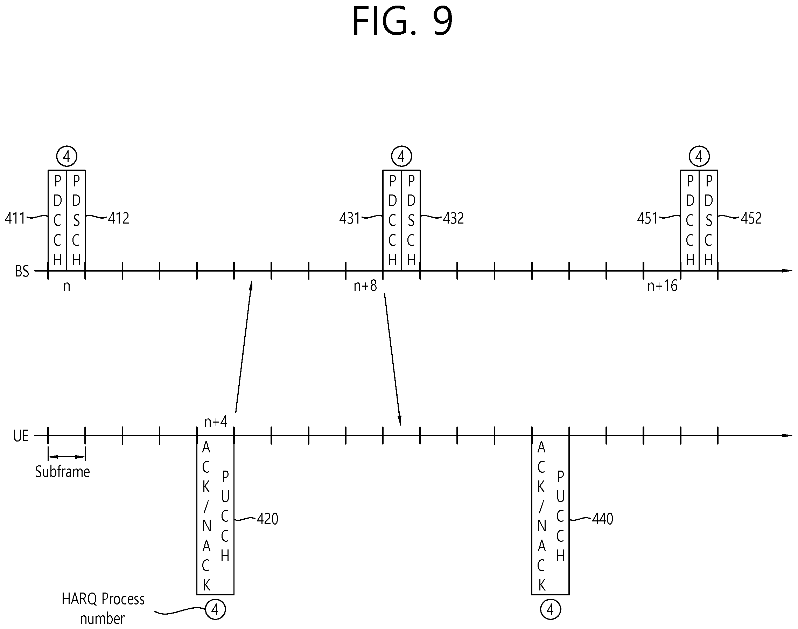

Fig. 9 illustrates a downlink HARQ which is performed by one cell in 3GPP LTE.

Referring to Fig. 9, a base station transmits downlink data (e.g., a downlink transmission block) on a PDSCH 412 indicated by allocating a downlink resource on a PDCCH 411 by a subframe n to the terminal.

The terminal sends an ACK/NACK on a PUCCH 420 by an (n+4)-th subframe. For example, a resource of the PUCCH 420 used to transmit the ACK/NACK signal may be determined based on a resource of the PDCCH 411 (e.g., an index of a first CCE used to transmit the PDCCH 411).

Although the base station receives an NACK signal from the terminal, retransmission is not always performed by an (n+8)-th subframe unlike the uplink HARQ. In this case, the retransmission block is transmitted on a PDSCH 432 indicated by allocating an uplink resource on the PDCCH 431 by the (n+9)-th subframe for the illustrative purpose.

The terminal sends the ACK/NACK signal on the PDCCH 440 by an (n+13)-th subframe.

The uplink HARQ includes UL grant transmission of the base station, PUSCH transmission of the terminal (scheduled by the UL grant), and a procedure of transmitting an ACK/NACK with respect to the PUSCH trough the PHICH or transmitting a new UL grant by the base station. The uplink HARQ may be previously determined where an interval between the UL grant and the PUSCH and an interval between the PUSCH and the PHICH (or the UL grant) are 4 ms.

Now, a carrier aggregation system is described. The carrier aggregation system is also called a multiple carrier system.

A 3GPP LTE system supports a case where a DL bandwidth and a UL bandwidth are differently configured, but one component carrier (CC) is a precondition in this case. A 3GPP LTE system supports a maximum of 20 MHz and may be different in a UL bandwidth and a DL bandwidth, but supports only one CC in each of UL and DL

A carrier aggregation (also called a bandwidth aggregation or a spectrum aggregation) supports a plurality of CCs. For example, if 5 CCs are allocated as the granularity of a carrier unit having a 20 MHz bandwidth, a maximum of a 100 MHz bandwidth may be supported.

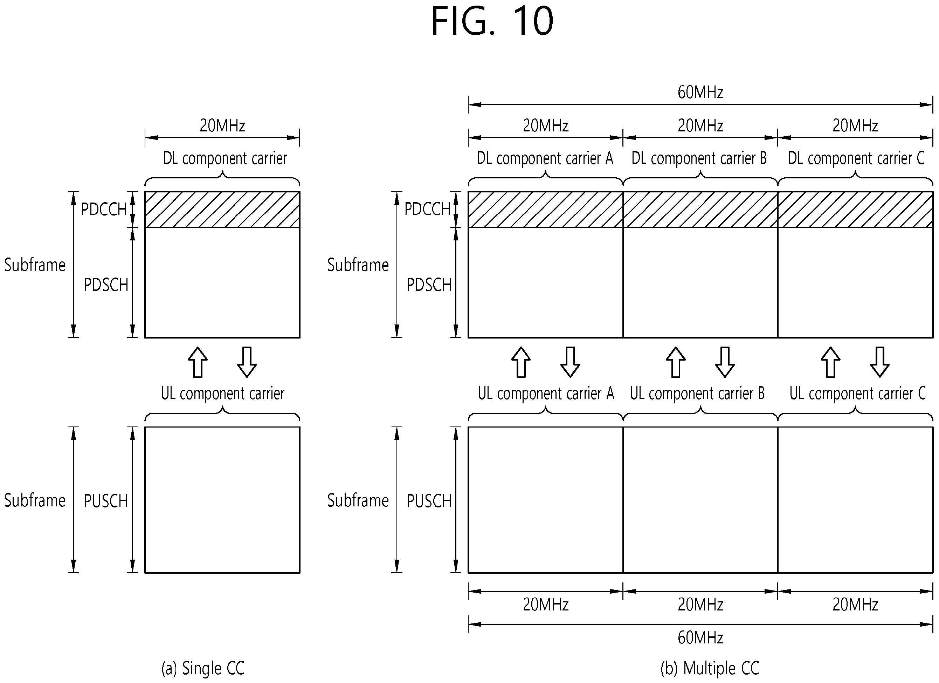

FIG. 10 shows an example of a comparison between a single carrier system and a carrier aggregation system.

A carrier aggregation system (FIG. 10 (b)) has been illustrated as including three DL CCs and three UL CCs, but the number of DL CCs and UL CCs is not limited. A PDCCH and a PDSCH may be independently transmitted in each DL CC, and a PUCCH and a PUSCH may be independently transmitted in each UL CC. Or, a PUCCH may be transmitted only through a specific UL CC.

Since three pairs of DL CCs and UL CCs are defined, it can be said that a UE is served from three serving cells. Hereinafter, a cell which is configured to provide a service to a user equipment is referred to a serving cell.

The UE may monitor PDCCHs in a plurality of DL CCs and receive DL transport blocks through the plurality of DL CCs at the same time. The UE may send a plurality of UL transport blocks through a plurality of UL CCs at the same time.

A pair of a DL CC #A and a UL CC #A may become a first serving cell, a pair of a DL CC #B and a UL CC #B may become a second serving cell, and a DL CC #C and a UL CC#C may become a third serving cell. Each serving cell may be identified by a cell index (CI). The CI may be unique within a cell or may be UE-specific.

The serving cell may be divided into a primary cell and a secondary cell. The primary cell is a cell on which the UE performs an initial connection establishment procedure or initiates a connection re-establishment procedure, or a cell designated as a primary cell in a handover process. The primary cell is also called a reference cell. The secondary cell may be configured after an RRC connection has been established and may be used to provide additional radio resources. At least one primary cell is always configured, and a secondary cell may be added/modified/released in response to higher layer signaling (e.g., an RRC message). The CI of the primary cell may be fixed. For example, the lowest CI may be designated as the CI of the primary cell.

The primary cell includes a downlink primary component carrier (DL PCC) and an uplink PCC (UL PCC) in view of a CC. The secondary cell includes only a downlink secondary component carrier (DL SCC) or a pair of a DL SCC and a UL SCC in view of a CC.

As described above, the carrier aggregation system may support a plurality of CCs, that is, a plurality of serving cells unlike the single carrier system.

Such a carrier aggregation system may support cross-carrier scheduling. The cross-carrier scheduling is a scheduling method capable of performing resource allocation of a PDSCH transmitted through a different component carrier through a PDCCH transmitted through a specific component carrier and/or resource allocation of a PUSCH transmitted through other component carriers except for a component carrier fundamentally linked with the specific component carrier. That is, the PDCCH and the PDSCH may be transmitted through different DL CCs, and a PUSCH may be transmitted through a UL CC different from a UL CC linked with a DL CC to which a PDCCH including a UL is transmitted. As described above, in a system for supporting the cross-carrier scheduling, the PDCCH needs a carrier indicator indicating that PDSCH/PUSCH are transmitted through a certain DL CC/UL CC. Hereinafter, a field including the carrier indicator refers to a carrier indication field (CIF).

The carrier aggregation system that supports the cross-carrier scheduling may include a carrier indication field (CIF) to the conventional downlink control information (DCI). In a system that supports the cross-carrier scheduling, for example, LTE-A system, 3 bits may be extended since the CIF is added to the conventional DCI format (i.e., the DCI format used in LTE), and the PDCCH structure may reuse the conventional coding method, resource allocation method (i.e., resource mapping based on the CCE), and the like.

A BS may set a PDCCH monitoring DL CC (monitoring CC) group. The PDCCH monitoring DL CC group is configured by a part of all aggregated DL CCs. If the cross-carrier scheduling is configured, the UE performs PDCCH monitoring/decoding for only a DL CC included in the PDCCH monitoring DL CC group. That is, the BS transmits a PDCCH with respect to a PDSCH/PUSCH to be scheduled through only the DL CCs included in the PDCCH monitoring DL CC group. The PDCCH monitoring DL CC group may be configured in a UE-specific, UE group-specific, or cell-specific manner.

Non-cross carrier scheduling (NCSS) is a scheduling method capable of performing resource allocation of a PDSCH transmitted through a specific component carrier through a PDCCH transmitted through the specific component carrier and/or resource allocation of a PDSCH transmitted through a component carrier fundamentally linked with the specific component carrier.

ACK/NACK transmission for HARQ in 3GPP LTE Time Division Duplex (TDD) is described below.

In TDD, unlike in a Frequency Division Duplex (FDD), a DL subframe and an UL subframe coexist in one radio frame. In general, the number of UL subframes is smaller than that of DL subframes. Accordingly, in preparation for a case where UL subframes for sending an ACK/NACK signal are not sufficient, a plurality of ACK/NACK signals for DL transport blocks received in a plurality of DL subframes is transmitted in one UL subframe.

In accordance with section 10.1 of 3GPP TS 36.213 V8.7.0 (2009-05), two ACK/NACK modes: ACK/NACK bundling and ACK/NACK multiplexing are initiated.

In ACK/NACK bundling, UE sends ACK if it has successfully decoded all received PDSCHs (i.e., DL transport blocks) and sends NACK in other cases. To this end, ACK or NACKs for each PDSCH are compressed through logical AND operations.

ACK/NACK multiplexing is also called ACK/NACK channel selection (or simply channel selection). In accordance with ACK/NACK multiplexing, UE selects one of a plurality of PUCCH resources and sends ACK/NACK.

A following table 5 illustrates a DL subframe n-k associated with a UL subframe n according to a UL-DL configuration in 3GPP LTE. In this case, k∈K and the M represents the number of components of a group K (hereinafter, the K represents a group including k, and the M represents the number of components of a group K). That is, when the data are received by the DL subframe n-k, the ACK/NACK for the data is transmitted by the UL subframe n. The table 5 represents k values with respect to each UL subframe n, respectively. The table 5 represents a relationship between a downlink subframe receiving a data channel and an uplink subframe transmitting an ACK/NACK for the data channel when one cell, for example, only a primary cell is configured in the terminal.

[Table 5]

| UL-DL configuration | Subframe n | | | | | | | | | |
|---|---|---|---|---|---|---|---|---|---|---|
| | 0 | 1 | 2 | 3 | 4 | 5 | 6 | 7 | 8 | 9 |
| 0 | - | - | 6 | - | 4 | - | - | 6 | - | 4 |
| 1 | - | - | 7,6 | 4 | - | - | - | 7,6 | 4 | - |
| 2 | - | - | 8,7,4,6 | - | - | - | - | 8,7,4,6 | - | - |
| 3 | - | - | 7,6,11 | 6,5 | 5,4 | - | - | - | - | - |
| 4 | - | - | 12,8,7,11 | 6,5 4,7 | - | - | - | - | - | - |
| 5 | - | - | 13,12,9,8, 7,5,4,11,6 | - | - | - | - | - | - | - |
| 6 | - | - | 7 | 7 | 5 | - | - | 7 | 7 | - |

In an LTE-A Rel 10 system, one terminal may transmit/receive data through a plurality of cells which are aggregated. In this case, a control signal for scheduling/controlling a plurality of cells may be transmitted through a DL CC of only a specific cell or a DL CC of each cell. The former may refer to a cross carrier scheduling and the latter may refer to a non-cross carrier scheduling.

Hereinafter, a CC to which the control signal is transmitted may refer to a scheduling CC and a remaining CC may refer to a scheduled CC. In a downlink, the scheduling CC is the same as the scheduled CC in the non-cross carrier scheduling. The scheduling CC may differ from the scheduled CC in the cross carrier scheduling.

For example, the scheduling CC includes a primary CC (PCC). The PCC serves as a CC for transmitting an uplink control signal. A CC except for the PCC refers to a SCC. Hereinafter, the PCC is used as a representative example of the scheduling CC, and the SCC is used as a representative example of the scheduled CC. However, the present invention is not limited thereto.

Meanwhile, the terminal operating in the LTE-A Rel 10 system may aggregate only CCs including the same frame structure. Further, when the terminal aggregates a plurality of TDD CCs, only CCs having the same UL-DL configuration may be used. In addition, when the non-cross carrier scheduling is used, a timing relationship defined in one CC is simply enlarged and applied in a plurality of CCs.

However, in a next wireless communication system, aggregated CCs may use different frame structures. For example, the FDD CC and the TDD CC may be aggregated.

Fig. 11 illustrates an example where a plurality of serving cells uses different types of radio frames.

Referring to Fig. 11, a primary cell PCell and a secondary cell SCell may be configured in the terminal. In this case, the primary cell may be operated as an FDD and use the FDD frame, and the secondary cell may be operated as the TDD and use the TDD frame. Since the primary cell is the FDD cell, a ratio of a downlink subframe (expressed by D) to an uplink subframe (expressed by U) is 1:1. However, since the secondary cell is the TDD cell, a ratio of a downlink subframe to an uplink subframe may be different from 1:1.

Hereinafter, when a primary cell is a scheduling cell and a secondary cell is a scheduled cell, a frame structure used in an order of '[scheduling primary cell, scheduled secondary cell]' is expressed. A cell expressed as the primary cell may the same meaning as that transmitting a PDCCH.

In a case of [FDD, TDDx] (that is, when the primary cell is an FDD cell, and the secondary cell uses a TDD UL-DL configuration x), a HARQ timing between a PDSCH received by the secondary cell and the ACK/NACK (corresponding to PDSCH) transmitted from the primary cell may apply 1. a HARQ timing of the FDD cell, and 2. a HARQ timing according to a TDD UL-DL configuration x. Alternatively, the HARQ timing between a PDSCH received by the secondary cell and the ACK/NACK transmitted from the primary cell may apply 3. a HARQ timing according to a DL reference UL-DL configuration. A DL reference UL-DL configuration may use a RRC configuration or a preset reference UL-DL configuration.

A 'FDD cell HARQ timing' arrow marked with a solid line of FIG. 11 represents 1. an HARQ timing between a PDSCH and an ACK/NACK when an HARQ timing of the FDD cell is applied. An interval between a downlink sub-frame of a secondary cell receiving the PDSCH and an uplink sub-frame of a primary cell transmitting an ACK/NACK always becomes 4 subframes.

A 'HARQ timing' arrow marked with a dotted line of FIG. 11 according to a TDD UL-DL configuration represents 1. an HARQ timing between a PDSCH and the ACK/NACK when the 2. HARQ timing according to a TDD UL-DL configuration x is applied. A downlink sub-frame of a secondary cell receiving the PDSCH and an uplink sub-frame of a primary cell transmitting the ACK/NACK may be determined according to a TDD UL-DL configuration 2 (see table 5).

The DL reference UL-DL configuration means a UL-DL configuration used to determine an HARQ timing. For example, it is assumed that the primary cell is an FDD cell and a UL-DL configuration of the secondary cell is a UL-DL configuration 1. A DL reference UL-DL configuration for determining the HARQ may be determined as a UL-DL configuration 4 different from the UL-DL configuration 1 of the secondary cell. That is, when a data channel is received by a DL-subframe of the secondary cell, a subframe transmitting the ACK/NACK is not determined by a UL-DL configuration 1 but the subframe transmitting the ACK/NACK may be determined by a UL-DL configuration 1 (this is illustrative for having better understanding of the present disclosure only).

The DL reference UL-DL configuration is applicable when both of the primary cell and the secondary cell use the same TDD frame but use different UL-DL configurations.

A following table 6 represents a DL reference UL-DL configuration with respect to (UL-DL configuration # of the primary cell, UL-DL configuration # of the secondary cell).

[Table 6]

| Set number (Set #) | (Primary cell UL-DL configuration #, Secondary cell UL-DL configuration #) | DL-reference UL-DL configuration # |
|---|---|---|
| Set 1 | (0,0) | 0 |
| | (1,0),(1,1),(1,6) | 1 |
| | (2,0),(2,2),(2,1),(2,6) | 2 |
| | (3,0),(3,3),(3,6) | 3 |
| | (4,0),(4,1),(4,3),(4,4),(4,6) | 4 |
| | (5,0),(5,1),(5,2),(5,3),(5,4),(5,5),(5,6) | 5 |
| | (6,0),(6,6) | 6 |
| Set 2 | (0,1),(6,1) | 1 |
| | (0,2),(1,2),(6,2) | 2 |
| | (0,3),(6,3) | 3 |
| | (0,4),(1,4),(3,4),(6,4) | 4 |
| | (0,5),(1,5),(2,5),(3,5),(4,5),(6,5) | 5 |
| | (0,6) | 6 |
| Set 3 | (3,1),(1,3) | 4 |
| | (3,2),(4,2),(2,3),(2,4) | 5 |
| Set 4 | (0,1),(0,2),(0,3),(0,4),(0,5),(0,6) | 0 |
| | (1,2),(1,4),(1,5) | 1 |
| | (2,5) | 2 |
| | (3,4),(3,5) | 3 |
| | (4,5) | 4 |
| | (6,1),(6,2),(6,3),(6,4),(6,5) | 6 |
| Set 5 | (1,3) | 1 |
| | (2,3),(2,4) | 2 |
| | (3,1),(3,2) | 3 |
| | (4,2) | 4 |

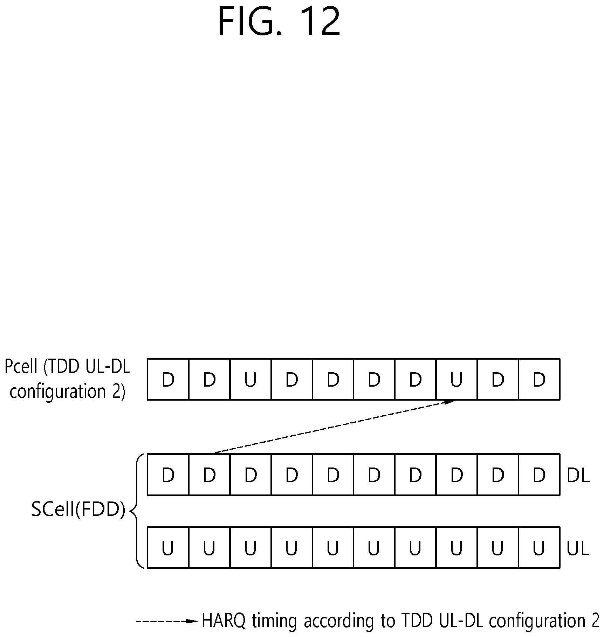

Fig. 12 illustrates another example where a plurality of serving cell uses different types of radio frames in a wireless communication system.

Referring to Fig. 12, a primary cell PCell using a TDD frame and secondary cells SCell using an FDD frame may be configured in the terminal.

As show in FIG. 12, in a case of [TDDx, FDD], the HARQ timing between a PDSCH received by the secondary cell and the ACK/NACK (corresponding to the PDSCH) may apply 1 the HARQ according to the TDD UL-DL configuration x. In particular, the HARQ timing between a PDSCH received by the secondary cell and the ACK/NACK is applicable to a cross carrier scheduling case. 2. The HARQ timing between a PDSCH received by the secondary cell and the ACK/NACK may apply an HARQ timing according to the reference UL-DL configuration. A DL reference UL-DL configuration may use a RRC configuration or a preset reference UL-DL configuration.

Alternatively, 3. the HARQ timing between a PDSCH received by the secondary cell and the ACK/NACK may apply an HARQ timing according to a TDD UL-DL configuration x and an additional HARQ timing is applicable to a DL subframe of a FDD cell arranged in a UL subframe in the TDD UL-DL configuration x.

For scheduling in a subframe when a transmission direction of (primary cell, secondary cell) is (U, D), multiple subframe scheduling or cross subframe scheduling. A new HARQ timing is restrictively applicable to a UL subframe in a TDD UL-DL configuration x.

As described above, in a LTE-A Release 10 system, one terminal may transmit/receive data/control information using a plurality of cells. In this case, the terminal uses one initial accessing cell as a primary cell PCell. A cell configured additionally configured through the primary cell refers to a secondary cell SCell. The primary cell is used for an operation for maintaining connection between the base station and the terminal. For example, operations such as radio link management (RLM), radio resource management (RRM), reception of system information, transmission of a physical random access channel (PRACH) and transmission of the PUCCH may be performed by the primary cell. Meanwhile, the secondary cell is mainly used to transmit a data channel or scheduling information for the data channel.

Meanwhile, the primary cell and the secondary cell are UE-specific. When a plurality of cells is included in a system, cells may be used as the primary cell or the secondary cell, respectively, and each terminal uses one of a plurality of cells as the primary cell. That is, an optional cell may serve as the primary cell or the secondary cell. Accordingly, all cells are configured to perform an operation of the primary cell. That is, all cells implement transmission of a synchronization signal, transmission of a broadcast channel, transmission of a CRS, and configuration of a PDCCH region. The above cell may refer to a backward compatible cell or may refer to an existing legacy carrier type (LCT) in a carrier aspect.

In contrast, if a cell is used as the secondary cell in a next wireless communication system, the introduction of a cell removing a part of the whole of unnecessary information is considered. The above cell may not be backward compatible and may refer to a new carrier type or extension carrier (NCT) as compared with an LCT. For example, in the NCT, the CRS is not transmitted every subframe but is transmitted in only a partial time domain or only a frequency domain, or a DL control channel region such as an existing PDCCH is removed or a partial time domain and the frequency domain are reduced so that UE-specific DL control channel region may be newly configured.

In a case of the FDD, the downlink and the uplink are identified based on different frequency bands. An NCT may be configured using only the downlink band. A TDD depends on a UL-DL configuration defined in a following table 7. A carrier is configured using only the downlink subframes and the configured carrier may be as the NCT.

[Table 7]

| Uplink-downlink configuration | subframe number | | | | | | | | | |
|---|---|---|---|---|---|---|---|---|---|---|
| | 0 | 1 | 2 | 3 | 4 | 5 | 6 | 7 | 8 | 9 |
| 0 | D | S | U | U | U | D | S | U | U | U |
| 1 | D | S | U | U | D | D | S | U | U | D |
| 2 | D | S | U | D | D | D | S | U | D | D |
| 3 | D | S | U | U | U | D | D | D | D | D |
| 4 | D | S | U | U | D | D | D | D | D | D |
| 5 | D | S | U | D | D | D | D | D | D | D |
| 6 | D | S | U | U | U | D | S | U | U | D |
| **X** | **D** | **D** | **D** | **D** | **D** | **D** | **D** | **D** | **D** | **D** |

When a TDD primary cell and an FDD secondary cell operated according to a UL-DL configuration of the TDD (a carrier configured by only a downlink band of the FFD or a carrier configured by only the downlink subframes) are aggregated, transmission directions in the same subframe of the aggregated cells may be different from each other. A FDD secondary cell may include a downlink subframe at the same time point as that of the downlink subframe of the TDD primary cell.

Transmission of the ACK/NACK for the PDSCH received by the secondary cell may be restrictively performed by the primary cell. In this case, the transmission of the ACK/NACK for the PDSCH depends on a downlink HARQ timing of the TDD primary cell. It cannot be determined when transmits the ACK/NACK for a PDSCH received by a downlink subframe of an FDD secondary cell at the same time as that of the downlink subframe of the TDD primary cell.

In particular, three more cells such as a primary cell, a first secondary cell, a second secondary cell are aggregated. When a cross carrier scheduling is used, there is a need for a method of configuring an ACK/NACK timing. For example, when the secondary cell is cross carrier scheduled from the first secondary cell, there is a demand to configure an ACK/NACK timing according to a combination between three cells.

In this case, the three cells may means only cells which cause influence upon the scheduling and the HARQ timing among a plurality of cells. A combination of three cells may include eight types as illustrated in a following 8.

[Table 8]

| | Primary cell | First secondary cell (scheduling cell) | Second secondary cell(scheduled cell) |
|---|---|---|---|
| Same TDD UL-DL configuration | FDD | FDD | TDDx |
| | FDD | TDDx | FDD |
| | FDD | TDDx | TDDx |
| | TDDx | TDDx | FDD |
| | TDDx | FDD | TDDx |
| Different TDD UL-DL configuration | FDD | TDDx | TDDy |
| | TDDx | TDDy | FDD |
| | TDDx | FDD | TDDy |

When there are no cells having different UL-DL configuration in a primary cell, a first secondary cell (scheduling cell), and a secondary cell (scheduled cell), a 'Same TDD UL-DL configuration' is expressed. When there are the cells having the different UL-DL configuration therein, a 'Different TDD UL-DL configuration' is expressed.

Hereinafter, an operation method of a primary cell, an operation method of a first secondary cell, and an operation method of a second secondary cell are sequentially described. It is assumed that the first secondary cell is a cell for scheduling a second secondary cell, and the second secondary cell is a cell scheduled from the first secondary cell. The 'TDD x' means a TDD cell of a TDD UL-DL configuration x (more exactly, a cell where the TDD UL-DL configuration is x or a cell specific configured TDD UL-DL configuration is x when the cell is operated as the primary cell). For example, a TDD3 means a TDD cell configured as a TDD UL-DL configuration 3.

Hereinafter, a HARQ timing of a scheduled cell according to each combination of the table 8 will be described. That is, when the first secondary cell schedules the second secondary cell, and the second secondary cell receives the PDSCH, if the ACK/NACK for the PDSCH is transmitted from the primary cell, a time relationship, that is, an HARQ timing between the PDSCH and the ACK/NACK will be described.

1. <FDD, FDD, TDDx>

That is, this is a case where a primary cell is an FDD cell, a secondary cell is the FDD cell, and a second cell is a TDDx. In this case, the primary cell and the first secondary cell are operated as the FDD. Transmission directions of subframes in the primary cell and the secondary cell correspond to each other. Accordingly, it is most preferable to apply the same HARQ timing as that of a case of [FDD, TDDx], that is, when the primary cell is the FDD cell and the secondary cell is the TDDx. A representative method of a case of the [FDD, TDDx] is to apply an HARQ timing of the FDD. That is, when the PDSCH is received by the first subframe of the secondary cell and an ACK/NACK for the PDSCH is transmitted from the second subframe of the primary cell, an interval between the first subframe and the second subframe is four subframes (like subframe N and a subframe N+4).

Meanwhile, in the [FDD, TDDx], if the HARQ timing is changed according to whether a non-cross carrier scheduling or a cross carrier scheduling is applied, an HARQ timing with respect to the non-cross carrier scheduling is applicable to the <FDD, FDD, TDDx>.

2. <FDD, TDDx, FDD>

That is, in this case, the primary cell is an FDD cell, the first secondary cell is operated according to a TDD UL-DL configuration x, and the second secondary cell is the FDD. In this case, some subframes between the primary cell and the first secondary cell may have different directions. However, in the FDD primary cell, since all subframes may perform downlink transmission and uplink transmission, the same HARQ timing as that of a case of the [TDDx, FDD] is applicable. As a representative method, an HARQ timing of the TDDx is applicable. In this case, for scheduling when a transmission direction with respect to the same subframe (scheduling secondary cell, scheduled secondary cell) is (U, D), a multiple subframe scheduling or a cross subframe scheduling is applicable. The multiple subframe scheduling schedules received by a plurality of subframes according to one PDCCH. The cross subframe scheduling schedules a PDSCH of the second subframe through the PDSCH of the first subframe. A new HARQ timing is restrictively applicable to an uplink subframe of the TDDx or an HARQ timing of the FDD cell is applicable. Meanwhile, in [TDDx, FDD], if the HARQ timing is changed according to whether a non-cross carrier scheduling or a cross carrier scheduling is applied, an HARQ timing with respect to the cross carrier scheduling is applicable to the <FDD, TDDx, FDD>.

Alternatively, since the primary cell is the FDD cell, the same HARQ timing as that of the [FDD, FDD] is applicable. That is, an HARQ timing of the FDD cell is applied. In this case, for scheduling when a transmission direction of (scheduling secondary cell, scheduled secondary cell) is (U, D), the multiple subframe scheduling or the cross subframe scheduling is applicable. Meanwhile, in the [FDD, TDDx], if the HARQ timing is changed according to whether a non-cross carrier scheduling or a cross carrier scheduling is applied, an HARQ timing with respect to the non-cross carrier scheduling is applicable to the <FDD, TDDx, FDD>.

### 3. <FDD, TDDx, TDDx>

That is, in this case, the primary cell is an FDD, the first secondary cell is operated according to a TDD UL-DL configuration x, and the second secondary cell is operated according to a TDD UL-DL configuration x.

In this case, the first secondary cell and the second secondary cell use the same UL-DL configuration, transmission directions of usable subframes correspond to each other. Accordingly, the same HARQ timing as that of a case of the [FDD, TDDx] is applicable. For example, an HARQ timing of the FDD cell is applicable. Meanwhile, in the [FDD, TDDx], if the HARQ timing is changed according to whether the non-cross carrier scheduling or the cross carrier scheduling is applied, an HARQ timing with respect to the non-cross carrier scheduling is applicable to the <FDD, TDDx, TDDx>.

### 4. <TDDx, TDDx, FDD>

That is, in this case, the primary cell is operated according to a TDD UL-DL configuration x, the first secondary cell is operated according to a TDD UL-DL configuration x, and the second secondary cell is an FDD cell.

In this case, the primary cell and the first secondary cell use the same UL-DL configuration, transmission directions of usable subframes between the primary cell and the first secondary cell correspond to each other. Accordingly, it is most preferable to apply the same HARQ timing as that of a case of the [TDDx, FDD]. Meanwhile, in the [TDDx, FDD], if the HARQ timing is changed according to whether the non-cross carrier scheduling or the cross carrier scheduling is applied, an HARQ timing with respect to the non-cross carrier scheduling is applicable to the <TDDx, TDDx, FDD>.

### 5. <TDDx, FDD, TDDx>

That is, in this case, the primary cell is operated according to a TDD UL-DL configuration x, the first secondary cell is an FDD, and the second secondary cell is operated according to a TDD UL-DL configuration x.

In this case, transmission directions of some subframes between the primary cell and the first secondary cell are different from each other and each direction transmission of the primary cell is impossible by all subframes. Accordingly, it is most preferable to apply the same HARQ timing as that of a case of the [TDDx, TDDx]. Meanwhile, in [TDDx, TDDx], if the HARQ timing is changed according to whether the non-cross carrier scheduling or the cross carrier scheduling is applied, an HARQ timing with respect to the non-cross carrier scheduling is applicable to the <TDDx, FDD, TDDx>.

In five combinations of the above 1 to 5, the primary cell, the first secondary cell, and the second secondary cell include one type of TDD UL-DL configuration. The HARQ timing of a case of [primary cell, scheduled secondary cell] is commonly applicable to the above combinations. However, exceptionally, a separate HARQ timing is applicable to a case where a transmission direction of a specific subframe is (U, D).

### 6. < FDD, TDDx, TDDy>

That is, in this case, the primary cell is an FDD, the first secondary cell is operated according to a TDD UL-DL configuration x, and the second secondary cell is operated according to a TDD UL-DL configuration y.

In this case, transmission directions of some subframes between the primary cell and the first secondary cell (scheduled secondary cell) are different from each other but downlink/uplink transmission is possible by all subframes of the FDD primary cell. Meanwhile, since the first secondary cell and the second secondary cell use different TDD UL-DL configurations, transmission directions of some subframes are different from each other. Accordingly, the same HARQ timing as that of a case of the [TDDx, TDDy] is applicable. As a representative method, an HARQ timing according to a DL-reference UL-DL configuration obtained from the table 10.2-1. In this case, for scheduling when a transmission direction of (scheduling secondary cell, scheduled secondary cell) is (U, D), a multiple subframe scheduling or a cross subframe scheduling is applicable. A new HARQ timing is restrictively applicable to the UL subframe in the TDD UL-DL configuration x or an HARQ timing of the FDD cell is applicable. Meanwhile, in [TDDx, TDDy], if the HARQ timing is changed according to whether the non-cross carrier scheduling or the cross carrier scheduling is applied, an HARQ timing with respect to the cross carrier scheduling is applicable to the <FDD, TDDx, TDDy>.

Alternatively, the same HARQ timing as that of a case of the [FDD, TDDy] is applicable. For example, the HARQ timing of the FDD cell is applied. In this case, for scheduling when a transmission direction of (scheduling secondary cell, scheduled secondary cell) is (U, D), the multiple subframe scheduling or the cross subframe scheduling is applicable. Meanwhile, in [FDD, TDDy], if the HARQ timing is changed according to whether the non-cross carrier scheduling or the cross carrier scheduling is applied, an HARQ timing with respect to the non-cross carrier scheduling is applicable to the <FDD, TDDx, TDDy>.

7. <TDDx, TDDy, FDD>

That is, in this case, the primary cell is operated according to a TDD UL-DL configuration x, the first secondary cell is operated according to a TDD UL-DL configuration y, and the second secondary cell is an FDD cell.

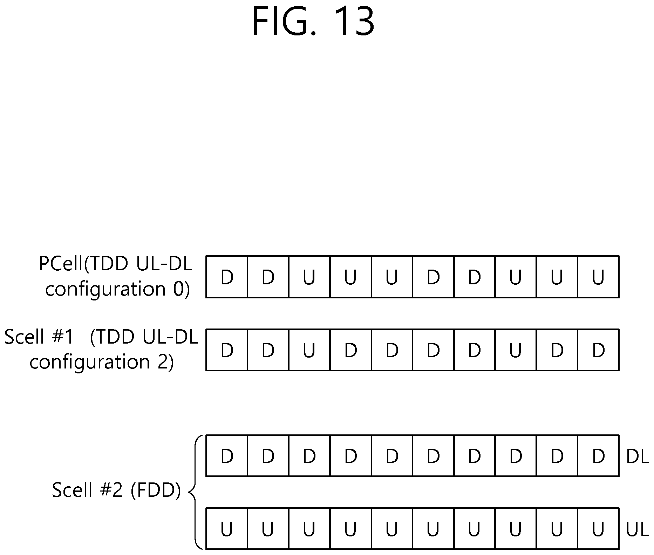

FIG. 13 illustrates a case of <TDD0, TDD2, FDD>.

Referring to FIG. 13, a primary cell uses a UL-DL configuration 0, and a first secondary cell is a UL-DL configuration 2, and a secondary cell is an FDD cell.

In this case, some subframes between the primary cell and the first secondary cell (a scheduling secondary cell) may have different directions, and some subframes between the secondary cell and the secondary cell may have different directions.

In view of the above characteristics, the same HARQ timing as that of a case of the [TDDx, TDDy] is applied to a HARQ timing between a PDSCH received by the second secondary cell and an ACK/NACK transmitted from a primary cell. That is, an HARQ timing applied when only the primary cell and the first secondary cell are aggregated is applicable. When a data channel is received by a subframe n-k of the secondary cell, a subframe n of a primary cell transmitting an ACK/NACK for the data channel may be determined in the same manner as a case of receiving the data channel by a subframe n-k of the secondary cell.

As a representative method, a HARQ timing according to a DL reference UL-DL configuration obtained from the table 6. In this case, for scheduling when a transmission direction of (scheduling secondary cell, scheduled secondary cell) is (U, D), the multiple subframe scheduling or the cross subframe scheduling is applicable. A new HARQ timing is restrictively applicable to the UL subframe in the TDD UL-DL configuration. Meanwhile, in [TDDx, TDDy], if the HARQ timing is changed according to whether the non-cross carrier scheduling or the cross carrier scheduling is applied, the HARQ timing with respect to the non-cross carrier scheduling is applicable to the <TDDx, TDDy, FDD>.

Alternatively, the same HARQ timing as that of a case of the [TDDx, FDD] is applicable to a HARQ timing between a PDSCH received by the second secondary cell and an ACK/NACK transmitted from a primary cell. That is, only the primary cell and the second secondary cell are aggregated, the same HARQ timing is applicable. For example, an HARQ timing according to a TDD UL-DL configuration x is applied.

For example, it is assumed that scheduling information is received from a first secondary cell, a data channel (scheduled according to the scheduling information), and an ACK/NACK for the data channel is transmitted through a primary cell. In this case, the primary cell and the first secondary cell use different UL-DL configurations and a time division duplex (TDD) frame. The secondary cell is a cell using a frequency division duplex (FDD). In this case, when the data channel is received by a subframe n-k of the second secondary cell, and an ACK/NACK for the data channel is transmitted from a subframe n of the primary cell, the k with respect to the subframe n is determined based on the table 5.

For scheduling when a transmission direction of (scheduling secondary cell, scheduled secondary cell) is (U, D), the multiple subframe scheduling or the cross subframe scheduling is applicable. Meanwhile, the scheduling may be limited to a case of a PDSCH in a subframe where the transmission direction of (TDDx, TDDy) is (D, U). In this case, the terminal may not attempt reception of a PDCCH or an ePDCCH of a corresponding subframe of a scheduled cell. Meanwhile, in the [TDDx, FDD], if the HARQ timing is changed according to whether the non-cross carrier scheduling or the cross carrier scheduling is applied, the HARQ timing with respect to the non-cross carrier scheduling is applicable to the <TDDx, TDDy, FDD>.

8. <TDDx, FDD, TDDy>

That is, in this case, the primary cell is operated according to a TDD UL-DL configuration x, the first secondary cell is an FDD cell, and the second secondary cell is operated according to a TDD UL-DL configuration y.

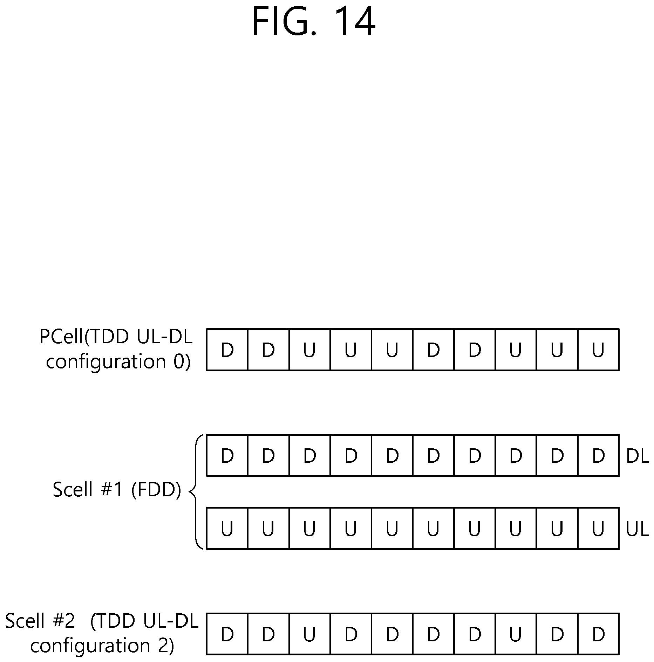

FIG. 14 illustrates a case of <TDD0, FDD, TDD2>.

Referring to FIG. 14, a primary cell uses a UL-DL configuration 0, and a first secondary cell is an FDD cell, and a secondary cell is a UL-DL configuration 2.

In this case, some subframes between the primary cell and the first secondary cell (a scheduling secondary cell) may have different directions, and some subframes between the secondary cell and the secondary cell may have different directions.

The same HARQ timing as that of a case of the [TDDx, TDDy] is applicable to a HARQ timing between a PDSCH received by the second secondary cell and an ACK/NACK transmitted from a primary cell. As a representative method, an HARQ timing according to a DL-reference UL-DL configuration obtained from the table 6. In this case, for the scheduling when a transmission direction of (scheduling secondary cell, scheduled secondary cell) is (U, D), a multiple subframe scheduling or a cross subframe scheduling is applicable. A new HARQ timing is restrictively applicable to the UL subframe in the TDD UL-DL configuration x. Meanwhile, in the [TDDx, TDDy], if the HARQ timing is changed according to whether the non-cross carrier scheduling or the cross carrier scheduling is applied, an HARQ timing with respect to the non-cross carrier scheduling is applicable to the <TDDx, FDD, TDDy>.

Alternatively, the same HARQ timing as that of a case of the [FDD, TDDy] is applied to a HARQ timing between a PDSCH received by the second secondary cell and an ACK/NACK transmitted from a primary cell. Meanwhile, scheduling may be limited to a case of a PDSCH in a subframe where the transmission direction of (TDDx, FDD) is (D, U). In this case, the terminal may not attempt reception of a PDCCH or an ePDCCH of a corresponding subframe of a scheduled cell. Meanwhile, in [FDD, TDDy], if the HARQ timing is changed according to whether the non-cross carrier scheduling or the cross carrier scheduling is applied, the HARQ timing with respect to the cross carrier scheduling is applicable to the <TDDx, FDD, TDDy>.

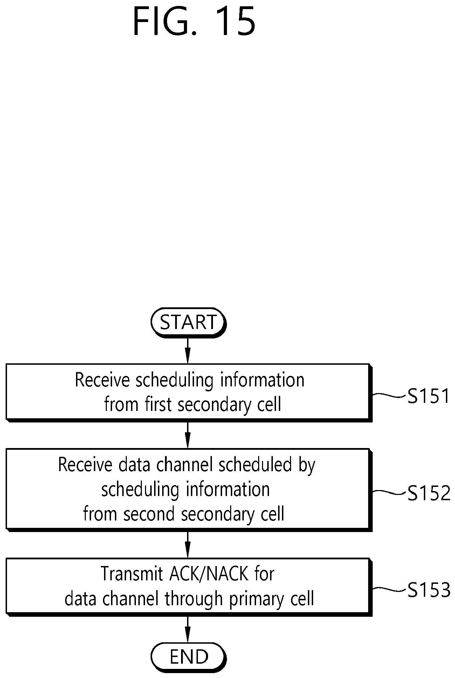

Fig. 15 is a flowchart illustrating a method for transmitting an ACK/NACK by a terminal according to an embodiment of the present invention.

Referring to Fig. 15, a terminal receives scheduling information on a first secondary cell (S151). The terminal receives a data channel scheduled by scheduling information on a second secondary cell (S152).

The terminal transmits an ACK/NACK for the data channel through a primary cell (S153).

An HARQ timing indicating a relationship between the subframe receiving the data channel and the subframe transmitting the ACK/NACK was described with reference to the above 1 to the above 8.

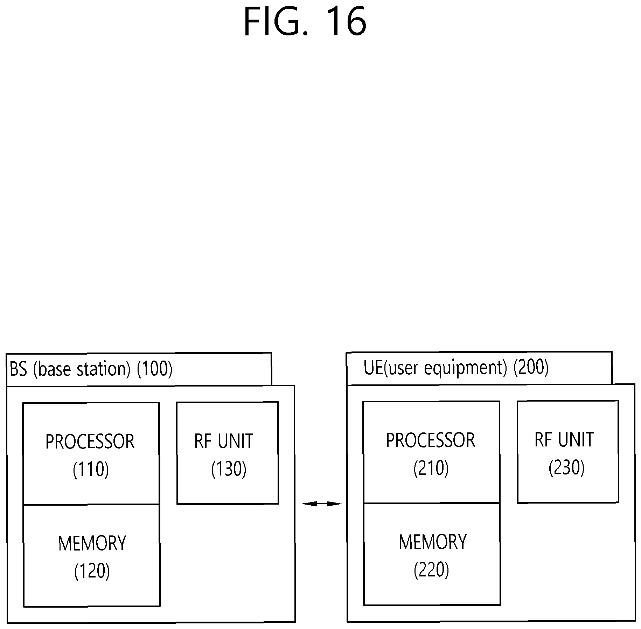

Fig. 16 is a block diagram illustrating a wireless device according to an embodiment of the present invention.

A base station 100 includes a processor 110, a memory 120, and a radio frequency (RF) unit 130. The processor 110 performs the proposed functions, processes and/or methods. For example, the processor 110 configures three cells using in a terminal. The three cells may include a primary cell, a first secondary cell, and a second secondary cell. The primary cell and the first secondary cell may be a cell using a time division duplex (TDD) frame. The second secondary cell may be a cell using a frequency division duplex (FDD) frame. Next, the processor 110 may transmit the data channel through the second secondary cell, and may receive an ACK/NACK for the data channel through the primary cell. The memory 120 is connected to the processor 110, and stores various information for operating the processor 110. The RF unit 130 is connected to the processor 110, and sends and receives radio signals.

A terminal 200 includes a processor 210, a memory 220, and an RF unit 230. The processor 210 performs the proposed functions, processes and/or methods. For example, the processor 210 may support aggregation of three cells. The three cells may include a primary cell, a first secondary cell, and a second secondary cell. The primary cell and the first secondary cell may be a cell using a time division duplex (TDD) frame. The second secondary cell may be a cell using a frequency division duplex (FDD) frame. The terminal 200 may receive a data channel through the second secondary cell, and may transmit an ACK/NACK for the data channel through the primary cell. In this case, the transmission time of the data channel and the ACK/NACK are described above. The memory 220 is connected to the processor 210, and stores various information for operating the processor 210. The RF unit 230 is connected to the processor 210, and sends and receives radio signals.

The processor 110, 210 may include Application-Specific Integrated Circuits (ASICs), other chipsets, logic circuits, data processing devices and/or converters for mutually converting baseband signals and radio signals. The memory 120, 220 may include Read-Only Memory (ROM), Random Access Memory (RAM), flash memory, memory cards, storage media and/or other storage devices. The RF unit 130, 230 may include one or more antennas for transmitting and/or receiving radio signals. When an embodiment is implemented in software, the above-described scheme may be implemented as a module (process, function, etc.) for performing the above-described function. The module may be stored in the memory 120, 220 and executed by the processor 110, 210. The memory 120, 220 may be placed inside or outside the processor 110, 210 and connected to the processor 110, 210 using a variety of well-known means.

**Claims**

1.    A method for transmitting an ACK/NACK by a user equipment, UE, (200) which is configured with a primary cell, a first secondary cell in a long term evolution, LTE, network, **characterized in that** the UE is further configured with a second secondary cell, the method comprising:

receiving (S151) scheduling information on the first secondary cell,
wherein the primary cell and the first secondary cell use a time division duplex, TDD, frame, and the second secondary cell uses a frequency division duplex, FDD, frame;
receiving (S152) a data channel on the second secondary cell based on the scheduling information received on the first secondary cell; and

transmitting (S153) an ACK/NACK for the data channel through the primary cell,

wherein the data channel received on the second secondary cell using the FDD frame is scheduled by the scheduling information received on the first secondary cell using the TDD frame,wherein an uplink-downlink configuration for the TDD frame is one of uplink-downlink configurations 0 to 6 such that:

| Uplink-downlink configuration | subframe number | | | | | | | | | |
|---|---|---|---|---|---|---|---|---|---|---|
| | 0 | 1 | 2 | 3 | 4 | 5 | 6 | 7 | 8 | 9 |
| 0 | D | S | U | U | U | D | S | U | U | U |
| 1 | D | S | U | U | D | D | S | U | U | D |
| 2 | D | S | U | D | D | D | S | U | D | D |
| 3 | D | S | U | U | U | D | D | D | D | D |
| 4 | D | S | U | U | D | D | D | D | D | D |
| 5 | D | S | U | D | D | D | D | D | D | D |
| 6 | D | S | U | U | U | D | S | U | U | D |

where D indicates a downlink subframe, S indicates a special subframe, and U indicates an uplink subframe;

wherein the primary cell and the first secondary cell use different uplink-downlink configurations among the uplink-downlink configurations 0 to 6,

wherein one of the uplink-downlink configurations is determined as a reference uplink-downlink configuration, and the ACK/NACK for the data channel is transmitted according to the HARQ timing of the reference uplink-downlink configuration.

2. The method of claim 1, wherein when the data channel is received by a subframe n-k of the second secondary cell, a subframe n of the primary cell transmitting the ACK/NACK for the data channel is determined in the same manner as a case of receiving the data channel by a subframe n-k of the first secondary cell.

3. A method for transmitting an ACK/NACK by a user equipment, UE, (200) which is configured with a primary cell, a first secondary cell in a long term evolution, LTE, network, **characterized in that** the UE is further configured with a second secondary cell, the method comprising:

receiving (S151) scheduling information on the first secondary cell,

wherein the primary cell and the second secondary cell use a time division duplex, TDD, frame, and the first secondary cell uses a frequency division duplex, FDD, frame;

receiving (S152) a data channel on the second secondary cell based on the scheduling information received on the first secondary cell; and

transmitting (S153) an ACK/NACK for the data channel through the primary cell,

wherein the data channel received on the second secondary cell using the TDD frame is scheduled by the scheduling information received on the first secondary cell using the FDD frame, wherein an uplink-downlink configuration for the TDD frame is one of uplink-downlink configurations 0 to 6, such that:

| Uplink-downlink configuration | Subframe n | | | | | | | | | |
|---|---|---|---|---|---|---|---|---|---|---|
| | 0 | 1 | 2 | 3 | 4 | 5 | 6 | 7 | 8 | 9 |
| 0 | D | S | U | U | U | D | S | U | U | U |
| 1 | D | S | U | U | D | D | S | U | U | D |
| 2 | D | S | U | D | D | D | S | U | D | D |
| 3 | D | S | U | U | U | D | D | D | D | D |
| 4 | D | S | U | U | D | D | D | D | D | D |
| 5 | D | S | U | D | D | D | D | D | D | D |

(continued)

| Uplink-downlink configuration | Subframe n | | | | | | | | | |
|---|---|---|---|---|---|---|---|---|---|---|
| | 0 | 1 | 2 | 3 | 4 | 5 | 6 | 7 | 8 | 9 |
| 6 | D | S | U | U | U | D | S | U | U | D |

where D indicates a downlink subframe, S indicates a special subframe, and U indicates an uplink subframe; wherein the primary cell and the second secondary cell uses different uplink-downlink configurations among the uplink-downlink configurations 0 to 6, wherein one of the uplink-downlink configurations is determined as a reference uplink-downlink configuration, the ACK/NACK is transmitted according to the HARQ timing of the reference uplink-downlink configuration.

4. A user equipment, UE, (200) which is configured with a primary cell, a first secondary cell, **characterized in that** the UE is further configured with a second secondary cell in an LTE network, the user equipment (200) comprising:

a radio frequency, RF, unit (230) configured to transmit and receive a radio signal; and
a processor (210) connected to the RF unit,
wherein the processor (210) is configured to perform a method according to any of claims 1 to 3.

**Patentansprüche**

1. Verfahren zur Übertragung der ACK/NACK durch ein Benutzergerät, UE, (200), das mit einer Primärzelle, einer ersten Sekundärzelle in einem Netzwerk der Long Term Evolution, LTE, konfiguriert ist, **dadurch gekennzeichnet, dass** das UE ferner mit einer zweiten Sekundärzelle konfiguriert ist, wobei das Verfahren aufweist:

Empfangen (S151) von Zeitplanungsinformationen auf der ersten Sekundärzelle,
wobei die Primärzelle und die erste Sekundärzelle einen Zeitteilungsduplex-, TDD-, Rahmen verwenden und die zweite Sekundärzelle einen Frequenzteilungsduplex-, FDD-, Rahmen verwendet;
Empfangen (S152) eines Datenkanals auf der zweiten Sekundärzelle basierend auf den Zeitplanungsinformationen, die auf der ersten Sekundärzelle empfangen wurden; und
Übertragen (S153) einer ACK/NACK für den Datenkanal durch die Primärzelle;
wobei der auf der zweiten Sekundärzelle unter Verwendung des FDD-Rahmens empfangene Datenkanal durch die Zeitplanungsinformationen zeitlich geplant wird, die auf der ersten Sekundärzelle unter Verwendung des TDD-Rahmens empfangen werden, wobei eine Uplink-Downlink-Konfiguration für den TDD-Rahmen eine der Uplink-Downlink-Konfigurationen 0 bis 6 ist, so dass:

| Uplink-Downlink Konfiguration | Subrahmennummer | | | | | | | | | |
|---|---|---|---|---|---|---|---|---|---|---|
| | 0 | 1 | 2 | 3 | 4 | 5 | 6 | 7 | 8 | 9 |
| 0 | D | S | U | U | U | D | S | U | U | U |
| 1 | D | S | U | U | D | D | S | U | U | D |
| 2 | D | S | U | D | D | D | S | U | D | D |
| 3 | D | S | U | U | U | D | D | D | D | D |
| 4 | D | S | U | U | D | D | D | D | D | D |
| 5 | D | S | U | D | D | D | D | D | D | D |
| 6 | D | S | U | U | U | D | S | U | U | D |

wobei D einen Downlink-Subrahmen anzeigt, S einen speziellen Subrahmen anzeigt und U einen Uplink-Subrahmen anzeigt;
wobei die Primärzelle und die erste Sekundärzelle verschiedene Uplink-Downlink-Konfigurationen von den Uplink-Downlink-Konfigurationen 0 bis 6 verwenden;
wobei eine der Uplink-Downlink-Konfigurationen als eine Referenz-Uplink-Downlink-Konfiguration bestimmt wird, und die ACK/NACK für den Datenkanal gemäß der HARQ-Zeit der Referenz-Uplink-Downlink-Konfiguration übertragen wird.

2. Verfahren nach Anspruch 1, wobei, wenn der Datenkanal durch einen Subrahmen n-k der zweiten Sekundärzelle empfangen wird, ein Subrahmen n der Primärzelle, welche die ACK/NACK für den Datenkanal überträgt, auf die gleiche Weise wie ein Fall zum Empfangen des Datenkanals durch einen Subrahmen n-k der ersten Sekundärzelle bestimmt wird.

3. Verfahren zur Übertragung der ACK/NACK durch ein Benutzergerät, UE, (200), das mit einer Primärzelle, einer ersten Sekundärzelle in einem Netzwerk der Long Term Evolution, LTE, konfiguriert ist, **dadurch gekennzeichnet, dass** das UE ferner mit einer zweiten Sekundärzelle konfiguriert ist, wobei das Verfahren aufweist:

Empfangen (S151) von Zeitplanungsinformationen auf der ersten Sekundärzelle,
wobei die Primärzelle und die zweite Sekundärzelle einen Zeitteilungsduplex-, TDD-, Rahmen verwenden und die erste Sekundärzelle einen Frequenzteilungsduplex-, FDD-, Rahmen verwendet;
Empfangen (S152) eines Datenkanals auf der zweiten Sekundärzelle basierend auf den Zeitplanungsinformationen, die auf der ersten Sekundärzelle empfangen wurden; und
Übertragen (S153) einer ACK/NACK für den Datenkanal durch die Primärzelle;
wobei der auf der zweiten Sekundärzelle unter Verwendung des TDD-Rahmens empfangene Datenkanal durch die Zeitplanungsinformationen zeitlich geplant wird, die auf der ersten Sekundärzelle unter Verwendung des FDD-Rahmens empfangen werden, wobei eine Uplink-Downlink-Konfiguration für den TDD-Rahmen eine der Uplink-Downlink-Konfigurationen 0 bis 6 ist, so dass:

| Uplink-Downlink Konfiguration | Subrahmennummer | | | | | | | | | |
|---|---|---|---|---|---|---|---|---|---|---|
| | 0 | 1 | 2 | 3 | 4 | 5 | 6 | 7 | 8 | 9 |
| 0 | D | S | U | U | U | D | S | U | U | U |
| 1 | D | S | U | U | D | D | S | U | U | D |
| 2 | D | S | U | D | D | D | S | U | D | D |
| 3 | D | S | U | U | U | D | D | D | D | D |
| 4 | D | S | U | U | D | D | D | D | D | D |
| 5 | D | S | U | D | D | D | D | D | D | D |
| 6 | D | S | U | U | U | D | S | U | U | D |

wobei D einen Downlink-Subrahmen anzeigt, S einen speziellen Subrahmen anzeigt und U einen Uplink-Subrahmen anzeigt;
wobei die Primärzelle und die zweite Sekundärzelle verschiedene Uplink-Downlink-Konfigurationen von den Uplink-Downlink-Konfigurationen 0 bis 6 verwenden;
wobei eine der Uplink-Downlink-Konfigurationen als eine Referenz-Uplink-Downlink-Konfiguration bestimmt wird, wobei die ACK/NACK gemäß der HARQ-Zeit der Referenz-Uplink-Downlink-Konfiguration übertragen wird.

4. Benutzergerät, UE, (200), das mit einer Primärzelle, einer ersten Sekundärzelle, konfiguriert ist, **dadurch gekennzeichnet, dass** das UE ferner mit einer zweiten Sekundärzelle in einem LTE-Netzwerk konfiguriert ist, wobei das Benutzergerät (200) aufweist:

eine Funkfrequenz-, RF-, Einheit (230), die konfiguriert ist, um ein Funksignal zu übertragen und zu empfangen; und
einen Prozessor (210), der mit der RF-Einheit verbunden ist,
wobei der Prozessor (210) konfiguriert ist, um ein Verfahren nach einem der Ansprüche 1 bis 3 durchzuführen.

**Revendications**

1. Procédé d'émission d'un accusé de réception/accusé de réception négatif, ACK/NACK, par un équipement utilisateur, UE, (200) qui est configuré avec une cellule primaire, une première cellule secondaire dans un réseau d'évolution à long terme, LTE, **caractérisé en ce que** l'UE est en outre configuré avec une seconde cellule secondaire, le procédé comprenant :

la réception (S151) d'informations de programmation sur la première cellule secondaire, dans lequel la cellule primaire et la première cellule secondaire utilisent une trame de duplexage par répartition dans le temps, TDD, et la seconde cellule secondaire utilise une trame de duplexage par répartition en fréquence, FDD ;
la réception (S152) d'un canal de données sur la seconde cellule secondaire sur la base des informations de programmation reçues sur la première cellule secondaire ; et
l'émission (S153) d'un ACK/NACK pour le canal de données par l'intermédiaire de la cellule primaire, dans lequel le canal de données reçu sur la seconde cellule secondaire en utilisant la trame FDD est programmé par les informations de programmation reçues sur la première cellule secondaire en utilisant la trame TDD, dans lequel une configuration de liaison montante-liaison descendante pour la trame TDD est l'une des configurations de liaison montante-liaison descendante 0 à 6 telles que :

| Configuration de liaison montante-liaison descendante | Numéro de sous-trame | | | | | | | | | |
|---|---|---|---|---|---|---|---|---|---|---|
| | 0 | 1 | 2 | 3 | 4 | 5 | 6 | 7 | 8 | 9 |
| 0 | D | S | U | U | U | D | S | U | U | U |
| 1 | D | S | U | U | D | D | S | U | U | D |
| 2 | D | S | U | D | D | D | S | U | D | D |
| 3 | D | S | U | U | U | D | D | D | D | D |
| 4 | D | S | U | U | D | D | D | D | D | D |
| 5 | D | S | U | D | D | D | D | D | D | D |
| 6 | D | S | U | U | U | D | S | U | U | D |

dans lequel D indique une sous-trame de liaison descendante, S indique une sous-trame spéciale, et U indique une sous-trame de liaison montante ;
dans lequel la cellule primaire et la première cellule secondaire utilisent des configurations de liaison montante-liaison descendante différentes parmi les configurations de liaison montante-liaison descendante 0 à 6, dans lequel l'une des configurations de liaison montante-liaison descendante est déterminée en tant que configuration de liaison montante-liaison descendante de référence, et l'ACK/NACK pour le canal de données est émis en fonction de la temporisation de demande de répétition automatique hybride, HARQ, de la configuration de liaison montante-liaison descendante de référence.

2. Procédé selon la revendication 1, dans lequel, lorsque le canal de données est reçu par une sous-trame n-k de la seconde cellule secondaire, une sous-trame n de la cellule primaire émettant l'ACK/NACK pour le canal de données est déterminée de la même manière qu'un cas de réception du canal de données par une sous-trame n-k de la première cellule secondaire.

3. Procédé d'émission d'un ACK/NACK par un équipement utilisateur, UE, (200) qui est configuré avec une cellule primaire, une première cellule secondaire dans un réseau d'évolution à long terme, LTE, **caractérisé en ce que** l'UE est en outre configuré avec une seconde cellule secondaire, le procédé comprenant :

la réception (S151) d'informations de programmation sur la première cellule secondaire, dans lequel la cellule primaire et la seconde cellule secondaire utilisent une trame de duplexage par répartition dans le temps, TDD, et la première cellule secondaire utilise une trame de duplexage par répartition en fréquence, FDD ;
la réception (S152) d'un canal de données sur la seconde cellule secondaire sur la base des informations de programmation reçues sur la première cellule secondaire ; et
l'émission (S153) d'un ACK/NACK pour le canal de données à travers la cellule primaire, dans lequel le canal de données reçu sur la seconde cellule secondaire en utilisant la trame TDD est programmé par les informations de programmation reçues sur la première cellule secondaire en utilisant la trame FDD, dans lequel une configuration de liaison montante-liaison descendante pour la trame TDD est l'une des configurations de liaison montante-liaison descendante 0 à 6 telles que :

| Configuration de liaison montante-liaison descendante | Numéro de sous-trame | | | | | | | | | |
|---|---|---|---|---|---|---|---|---|---|---|
| | 0 | 1 | 2 | 3 | 4 | 5 | 6 | 7 | 8 | 9 |
| 0 | D | S | U | U | U | D | S | U | U | U |
| 1 | D | S | U | U | D | D | S | U | U | D |
| 2 | D | S | U | D | D | D | S | U | D | D |
| 3 | D | S | U | U | U | D | D | D | D | D |
| 4 | D | S | U | U | D | D | D | D | D | D |
| 5 | D | S | U | D | D | D | D | D | D | D |
| 6 | D | S | U | U | U | D | S | U | U | D |

dans lequel D indique une sous-trame de liaison descendante, S indique une sous-trame spéciale, et U indique une sous-trame de liaison montante ;

dans lequel la cellule primaire et la seconde cellule secondaire utilisent des configurations de liaison montante-liaison descendante différentes parmi les configurations de liaison montante-liaison descendante 0 à 6, dans lequel l'une des configurations de liaison montante-liaison descendante est déterminée en tant que configuration de liaison montante-liaison descendante de référence, l'ACK/NACK est émis en fonction de la temporisation HARQ de la configuration de liaison montante-liaison descendante de référence.

4. Équipement utilisateur, UE, (200) qui est configuré avec une cellule primaire, une première cellule secondaire, **caractérisé en ce que** l'UE est en outre configuré avec une seconde cellule secondaire dans un réseau LTE, l'équipement utilisateur (200) comprenant :

une unité de radiofréquence, RF, (230) configurée pour émettre et recevoir un signal radio ; et
un processeur (210) relié à l'unité RF,
dans lequel le processeur (210) est configuré pour mettre en oeuvre un procédé selon l'une quelconque des revendications 1 à 3.

# FIG. 1

Radio Frame

Slot

| #0 | #1 | #2 | ... | #18 | #19 |

Subframe

# FIG. 2

# FIG. 3

One downlink slot

7 OFDM symbols

Resource block
12×7 resource elements

Resource element

$N^{DL} \times 12$ subcarriers

12 subcarriers

# FIG. 4

# FIG. 5

Control region {

Data region {

Control region {

RB pair

One slot

One slot

Subframe

Freq.

Time

# FIG. 6

2 bits ACK/NACK $\longrightarrow$ QPSK modulation $\longrightarrow$ Modulation symbol d(0)

d(0)

r(n) — $\otimes$
length-12

Cyclic Shift $I_{CS0}$    Cyclic Shift $I_{CS1}$        Cyclic Shift $I_{CS2}$    Cyclic Shift $I_{CS3}$

$d(0)r(n,I_{CS0})$    $d(0)r(n,I_{CS1})$      $d(0)r(n,I_{CS2})$    $d(0)r(n,I_{CS3})$

$w_i(0) \longrightarrow \otimes$   $w_i(1) \longrightarrow \otimes$     $w_i(2) \longrightarrow \otimes$   $w_i(3) \longrightarrow \otimes$

IFFT   IFFT     IFFT   IFFT

|  |  | RS | RS | RS |  |  |

IFFT   IFFT   IFFT

$w_i^{RS}(0) \longrightarrow \otimes$   $w_i^{RS}(1) \longrightarrow \otimes$   $w_i^{RS}(2) \longrightarrow \otimes$

$r(n,I_{CS4})$    $r(n,I_{CS5})$    $r(n,I_{CS6})$

Cyclic Shift $I_{CS4}$   Cyclic Shift $I_{CS5}$   Cyclic Shift $I_{CS6}$

r(n)

EP 3 057 259 B1

# FIG. 7

Coded CQI bits (10 bit) → QPSK modulation → Serial→parallel

d(0), d(1), d(2), d(3), d(4)

Length-12 branches with $r(n)$, Cyclic Shift $I_{CS0}$, $I_{CS1}$, $I_{CS2}$, $I_{CS3}$, $I_{CS4}$, IFFT blocks producing $d(0)\, r(n,I_{CS0})$, $d(1)\, r(n,I_{CS1})$, $d(2)\, r(n,I_{CS2})$, $d(3)\, r(n,I_{CS3})$, $d(4)\, r(n,I_{CS4})$

RS blocks with IFFT, Cyclic Shift $I_{CS5}$, $I_{CS6}$, $r(n, I_{CS5})$, $r(n, I_{CS6})$, $r(n)$ Length-12

EP 3 057 259 B1

# FIG. 8

Symbol sequence={d1, d2,...}

Block-spreading code (OCC)

C1 ⊗    C2 ⊗    C3 ⊗    C4 ⊗    C5 ⊗

FFT    FFT    FFT    FFT    FFT

IFFT    IFFT    IFFT    IFFT    IFFT

| Data | RS | Data | Data | Data | RS | Data |

1 Slot

EP 3 057 259 B1

# FIG. 9

# FIG. 10

(a) Single CC

(b) Multiple CC

# FIG. 11

| D | D | D | D | D | D | D | D | D | D | DL |

PCell(FDD)

| U | U | U | U | U | U | U | U | U | U | UL |

Scell (TDD UL-DL configuration 2)

| D | D | U | D | D | D | D | U | D | D |

→ HARQ timing of FDD cell

⇢ HARQ timing according to TDD UL-DL configuration 2

# FIG. 12

Pcell (TDD UL-DL
configuration 2)

| D | D | U | D | D | D | D | U | D | D |

SCell(FDD)

| D | D | D | D | D | D | D | D | D | D | DL

| U | U | U | U | U | U | U | U | U | U | UL

- - - - - - ▶ HARQ timing according to TDD UL-DL configuration 2

# FIG. 13

PCell(TDD UL-DL configuration 0)

| D | D | U | U | U | D | D | U | U | U |
|---|---|---|---|---|---|---|---|---|---|

Scell #1 (TDD UL-DL configuration 2)

| D | D | U | D | D | D | D | U | D | D |
|---|---|---|---|---|---|---|---|---|---|

Scell #2 (FDD)

| D | D | D | D | D | D | D | D | D | D | DL |
|---|---|---|---|---|---|---|---|---|---|----|

| U | U | U | U | U | U | U | U | U | U | UL |
|---|---|---|---|---|---|---|---|---|---|----|

# FIG. 14

PCell(TDD UL-DL configuration 0)

| D | D | U | U | U | D | D | U | U | U |

Scell #1 (FDD)

| D | D | D | D | D | D | D | D | D | D | DL |

| U | U | U | U | U | U | U | U | U | U | UL |

Scell #2 (TDD UL-DL configuration 2)

| D | D | U | D | D | D | D | U | D | D |

# FIG. 15

```
                    ( START )
                        │
                        ▼
        ┌───────────────────────────────┐
        │  Receive scheduling information │        S151
        │      from first secondary cell  │
        └───────────────────────────────┘
                        │
                        ▼
        ┌───────────────────────────────┐
        │  Receive data channel scheduled by │
        │      scheduling information        │     S152
        │      from second secondary cell    │
        └───────────────────────────────┘
                        │
                        ▼
        ┌───────────────────────────────┐
        │     Transmit ACK/NACK for      │        S153
        │  data channel through primary cell │
        └───────────────────────────────┘
                        │
                        ▼
                    ( END )
```

# FIG. 16

| BS (base station) (100) | | UE(user equipment) (200) | |
|---|---|---|---|
| PROCESSOR (110) | RF UNIT (130) | PROCESSOR (210) | RF UNIT (230) |
| MEMORY (120) | | MEMORY (220) | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2012113345 A1

- US 20130083707 A1

### Non-patent literature cited in the description

- Evolved Universal Terrestrial Radio Access (E-UTRA); Physical Channels and Modulation (Release 8). *3GPP TS 36.211 V8.7.0,* May 2009

- **NEC.** CA-based aspects for FDD-TDD joint operation. *3GPP DRAFT; R1-134253, 3RD GENERATION PARTNERSHIP PROJECT (3GPP)*
- *3GPP TS 36.213 V8.7.0,* May 2009